# EUROPÄISCHE PATENTSCHRIFT

(11) **EP 2 406 091 B1**
(45) Veröffentlichungstag und Bekanntmachung des Hinweises auf die Patenterteilung: **15.05.2013**
(21) Anmeldenummer: 10713145.0
(22) Anmeldetag: 09.03.2010
(51) Int. Cl.: B60J 1/17, E05F 11/38, B60J 5/04

(54) **TÜRMODUL ZUM EINBAU IN EINE KRAFTFAHRZEUGTÜR**
DOORMODULE FOR A VEHICLE DOOR
MODULE DE PORTE POUR PORTIÈRE DE VÉHICULE

(30) Priorität: 10.03.2009 DE 202009003452 U; 10.03.2009 DE 102009012645
(43) Veröffentlichungstag der Anmeldung: 18.01.2012
(73) Patentinhaber: Brose Fahrzeugteile GmbH & Co. KG, Hallstadt, 96103 Hallstadt (DE)
(72) Erfinder: PLEISS, Eberhard, 74193 Schwaigern (DE); HEBE, Ralph, 72160 Horb (DE)
(74) Vertreter: Baumgärtel, Gunnar
(86) Internationale Anmeldenummer: PCT/EP2010/052959
(87) Internationale Veröffentlichungsnummer: WO 2010/112305

(56) Entgegenhaltungen:
- EP-A1- 1 488 944
- DE-A1- 2 634 778

## Beschreibung

Die Erfindung betrifft ein Türmodul zum Einbau in eine Kraftfahrzeugtür nach dem Oberbegriff des Anspruchs 1.

Ein derartiges Türmodul ist z.B. EP 1488944 A offenbart und umfasst einen Türmodulträger sowie eine Mehrzahl Funktionskomponenten einer Kraftfahrzeugtür, wie z. B. einen Fensterheber, ein Türschloss, einen Lautsprecher, ein Airbagmodul und dergleichen, die an dem Türmodulträger vorzumontieren sind, bevor dieser (zusammen mit den hieran vormontierten Funktionskomponenten) in eine Kraftfahrzeugtür eingebaut wird.

Der Türmodulträger ist regelmäßig (aber nicht zwingend) so ausgestaltet, dass er einen großflächigen Ausschnitt der Kraftfahrzeugtür, genauer einen Ausschnitt in deren Türinnenhaut, überdeckt und feuchtigkeitsdicht verschließt, so dass der Türmodulträger einen Bestandteil der sogenannten Nass-/Trockenraumtrennung einer Kraftfahrzeugtür bildet, welche den Nassraum vom Trockenraum der Tür trennt. Unter dem Nassraum einer Kraftfahrzeugtür wird dabei derjenige, auch als Türschacht bezeichnete, Raum verstanden, welcher zwischen der - durch den Türmodulträger vervollständigten - Türinnenhaut und einer die äußere Designfläche der Kraftfahrzeugtür bildenden Türaußenhaut liegt. In diesen Raum kann im Betrieb des Kraftfahrzeugs Feuchtigkeit eindringen, z. B. beim Absenken einer höhenverstellbaren Fensterscheibe der Kraftfahrzeugtür, an deren Oberfläche Regentropfen haften. Der Trockenraum liegt demgegenüber vor der dem Fahrzeuginnenraum zugewandten Seite der Türinnenhaut und soll gegenüber etwaiger im Nassraum der Fahrzeugtür vorhandener Feuchtigkeit abgedichtet sein. Hierzu kann insbesondere die vorstehend beschriebene dichtende Anordnung eines Türmodulträgers über einen großflächigen Ausschnitt der Türinnenhaut beitragen.

Durch Nutzung eines in eine Kraftfahrzeugtür einzubauenden Türmodules lässt sich der Zusammenbau einer Kraftfahrzeugtür an deren Herstettungsort erheblich vereinfachen. Denn in einem Türmodul lassen sich mehrere Funktionskomponenten einer Kraftfahrzeugtür zu einer Baueinheit zusammenfassen und bei Bedarf auch bereits vor dem Einbau in eine Kraftfahrzeugtür vorprüfen, so dass anschließend alle diese Funktionskomponenten in einem einzigen Arbeitsgang in die zugehörige Kraftfahrzeugtür integriert werden können, indem der zur Aufnahme jener Funktionskomponenten vorgesehene Türmodulträger am Fertigungsort der Kraftfahrzeugtür an dieser angeordnet und befestigt wird.

Vorliegend geht es speziell um Türmodule, die als am Türmodulträger vormontierte Funktionskomponente mindestens eine Führungsschiene eines Fensterhebers umfassen.

Der Erfindung liegt das Problem zugrunde, bei einem Türmodul der eingangs genannten Art die Anpassbarkeit an unterschiedliche Einbaubedingungen in eine Kraftfahrzeugtür zu verbessern.

Dieses Problem wird erfindungsgemäß durch die Schaffung eines Türmoduls mit den Merkmalen des Anspruchs 1 gelöst.

Danach sind an dem Türmodulträger mindestens zwei voneinander verschiedene und voneinander beabstandete Sätze an Befestigungsstellen für eine Führungsschiene des Fensterhebers vorgesehen, so dass diese eine Führungsschiene unter Nutzung des einen oder anderen Satzes an Befestigungsstellen wahlweise in einer von zwei unterschiedlichen Betriebspositionen am Türmodulträger festgelegt werden kann, wobei die Befestigung der Führungsschiene am Türmodulträger mittels der ersten Befestigungsstellen zur Anordnung der Führungsschiene am Türmodulträger in einer ersten Betriebsposition führt und die Befestigung der Führungsschiene am Türmodulträger unter Verwendung der zweiten Befestigungsstellen zu einer Anordnung der Führungsschiene am Türmodulträger in einer zweiten Betriebsposition führt.

Unter einer Betriebsposition der Führungsschiene wird dabei eine Position der Führungsschiene am Türmodulträger verstanden, in der die Führungsschiene ausgerichtet und vorgesehen ist zum Führen einer zu verstellenden Fensterscheibe entlang ihrer Verstellrichtung. Es handelt sich hierbei also insbesondere nicht um eine sogenannte Transport- oder Vormontageposition, in der eine Führungsschiene zu Zwecken des Transports und/oder der Montage am Türmodulträger festgelegt wird und aus der heraus die Führungsschiene vor Inbetriebnahme des Fensterhebers in ihre eigentliche Betriebs- oder Funktionsposition überführt wird, in der sie zur Führung einer zu verstellenden Fensterscheibe entlang ihrer Verstellrichtung dient; vielmehr geht es hier ausdrücklich um die Anordenbarkeit der Führungsschiene in zwei unterschiedlichen Betriebspositionen am Türmodulträger, in denen sie jeweils zur Führung einer zu verstellenden Fensterscheibe dienen kann.

Ein jeweiliger Satz Befestigungsstellen des Türmodulträgers, über die die eine Führungsschiene in einer Betriebsposition festlegbar ist, kann mindestens zwei entlang der Erstreckungsrichtung der Führungsschiene voneinander beabstandete Befestigungsstellen umfassen, so dass die Führungsschiene an zwei entlang ihrer Erstreckungsrichtung voneinander beabstandeten Befestigungsstellen jeweils am Türmodulträger befestigbar ist.

Die unterschiedlichen (mindestens zwei) Sätze an Befestigungsstellen, über die die eine Führungsschiene in unterschiedlichen Betriebspositionen am Türmodulträger festgelegt werden kann, sind quer zur Erstreckungsrichtung der Führungsschiene voneinander beabstandet, so dass die Führungsschiene hierüber in unterschiedlichen, quer zu ihrer Erstreckungsrichtung voneinander beabstandeten Betriebspositionen am Türmodulträger festlegbar ist.

Gemäß einer Ausführungsform entsprechen dabei die unterschiedlichen Betriebspositionen, die die eine Führungsschiene am Türmodulträger einnehmen kann, im Wesentlichen einer Parallelverschiebung der Führungsschiene entlang der Fahrzeuglängsachse - bezogen auf den in eine Kraftfahrzeugtür eingebauten Zustand des Türmodulträgers. D. h., die Führungsschiene weist in ihren möglichen Betriebspositionen jeweils die gleiche räumliche Orientierung auf; sie nimmt dabei lediglich unterschiedliche Positionen entlang der Fahrzeuglängsachse ein.

Andererseits kann jedoch auch vorgesehen sein, dass die Führungsschiene in ihren unterschiedlichen Betriebspositionen eine abweichende räumliche Orientierung aufweist, insbesondere eine unterschiedliche Neigung bezüglich der vertikalen Fahrzeugachse.

Handelt es sich bei dem Fensterheber um einen sogenannten einsträngigen Fensterheber, mit nur einer entlang der Verstellrichtung der zu verstellenden Fensterscheibe erstreckten Führungsschiene, auf der ein die Fensterscheibe tragender Mitnehmer geführt ist, so dienen die mindestens zwei separaten Sätze an Befestigungsstellen des Türmodulträgers dazu, diese eine Führungsschiene in unterschiedlichen Betriebspositionen am Türmodulträger festlegen zu können.

Handelt es sich demgegenüber bei dem am Türmodulträger angeordneten Fensterheber um einen sogenannten mehrsträngigen (insbesondere zweisträngigen) Fensterheber, mit mindestens zwei entlang der Verstellrichtung der zu verstellenden Fensterscheibe erstreckten und quer zu ihrer Erstreckungsrichtung voneinander beabstandeten Führungsschienen, so dienen die mindestens zwei separaten Sätze an Befestigungsstellen dazu, eine dieser mehreren (beiden) Führungsschienen in unterschiedlichen Betriebspositionen am Türmodulträger festlegen zu können. Selbstverständlich können bei einem mehrsträngigen Fensterheber auch für mehrere der vorhandenen Führungsschienen jeweils unterschiedliche Sätze an Befestigungsstellen vorgesehen sein, um eine jeweilige Führungsschiene in unterschiedlichen Betriebspositionen am Türmodulträger festlegen zu können.

Die erfindungsgemäße Lösung eignet sich insbesondere zur Anwendung bei einem sogenannten Seilfensterheber, bei dem ein (z.B. über eine Seiltrommel) mit einem Verstellantrieb des Fensterhebers gekoppeltes flexibles Zugmittel über Umlenkelemente, insbesondere in Form von Umlenkrollen derart geführt ist, dass es sich mit einem Verstellabschnitt entlang einer jeweiligen Führungsschiene des Fensterhebers erstreckt. An jedem entlang einer zugeordneten Führungsschiene des Fensterhebers erstreckten Verstellabschnitt des flexiblen Zugmittels ist jeweils ein Mitnehmer festgelegt, der im Betrieb des Fensterhebers - durch Betätigung des Fensterheberantriebs - unter Wirkung der durch das flexible Zugmittel vom Fensterheberantrieb übertragenen Verstellkraft entlang der zugeordneten Führungsschiene verschoben wird, wobei die Verschieberichtung von der Betätigungsrichtung (Drehrichtung) des Fensterheberantriebs abhängt. Hierbei wird eine an dem Mitnehmer oder den Mitnehmern festgelegte Fensterscheibe mitgenommen, also je nach Verschieberichtung des jeweiligen Mitnehmers entlang der zugeordneten Führungsschiene angehoben oder abgesenkt.

Nach einer Weiterbildung der Erfindung umfasst der Türmodulträger mindestens ein Basisträgerelement, das einen Bestandteil des Türmodulträgers bildet, sowie mindestens eine Schnittstelle für ein Zusatzträgerelement, welches wahlweise (optional) zur Bildung des Türmodulträgers mit dem Basisträgerelement kombinierbar ist, um die Größe des Türmodulträgers in Abhängigkeit von der Größe der Kraftfahrzeugtür, in welche der Türmodulträger einzubauen ist, zu variieren. Es ist also ein Bausatz zur Bildung des Türmodulträgers vorgesehen, aus dem die jeweils benötigten Zusatzträgerelemente ausgewählt werden können. Dies führt zu einem modularisierten Aufbau des Türmodulträgers selbst, so dass dieser in einfacher Weise an unterschiedliche Größen und Geometrien einer zugeordneten Kraftfahrzeugtür anpassbar ist.

Diese Ausführungsform, die auch unabhängig von den kennzeichnenden Merkmalen des Anspruchs 1 realisiert werden kann, ist insbesondere vorgesehen zur Anpassung eines Türmodulträgers an den Aufbau und die Ausdehnung unterschiedlicher Kraftfahrzeugtüren einer Fahrzeugplattform. So werden auf der Basis einer Fahrzeugplattform regelmäßig sowohl vier- als auch zweitürige Kraftfahrzeuge hergestellt, wobei es sich bei dem zweitürigen Modell beispielsweise um eine Cabriolet-Version des viertürigen Modells handeln kann. In einem solchen Fall sind die Vordertüren des zweitürigen Fahrzeugs üblicherweise größer als die Vordertüren des viertürigen Fahrzeugs, z.B. indem erstere eine größere Ausdehnung entlang der Fahrzeuglängsachse aufweisen.

Unter Nutzung des erfindungsgemäß modularisierten Aufbaus des Türmodulträgers ist es nun nicht mehr erforderlich, für unterschiedlich gestaltete Fahrzeugtüren (insbesondere ein und derselben Fahrzeugplattform) jeweils einen eigenständigen Türmodulträger bereitzustellen. Vielmehr wird für die Türen unterschiedlicher Kraftfahrzeugmodelle jeweils ein und dasselbe Basisträgerelement des Türmodulträgers verwendet, und es wird lediglich ein hiermit zu kombinierendes Zusatzträgerelement variiert. Hierbei kann auch dem Umstand Rechnung getragen werden, dass unterschiedliche Türtypen einer Fahrzeugplattform regelmäßig in bestimmten Grundaspekten übereinstimmen, also etwa trotz gewisser Abweichungen in der Größe bereichsweise eine identische Schnittstelle zu einem hieran anzuordnenden Türmodulträger aufweisen. Solchen übereinstimmenden Bereichen zweier unterschiedlicher Türen ein und derselben Fahrzeugplattform kann dann beispielsweise jeweils das Basisträgerelement des Türmodulträgers zugeordnet sein, während an den sich unterscheidenden Bereichen unterschiedlicher Türtypen jeweils ein Zusatzträgerelement des Türmodulträgers vorgesehen ist, welches speziell an das Design der jeweiligen Tür angepasst ist.

Das mindestens eine Basisträgerelement sowie mindestens ein zugeordnetes Zusatzträgerelement sind so aufeinander abgestimmt, dass diese - bezogen auf den in eine Kraftfahrzeugtür eingebauten Zustand des Türmodulträgers - entlang der Fahrzeuglängsachse und/oder entlang der vertikalen Fahrzeugachse aneinander anschließen, um eine gewünschte Ausdehnung des resultierenden Türmodulträgers entlang der Fahrzeuglängsachse bzw. entlang der vertikalen Fahrzeugachse zu erreichen.

Abzüglich eines gewissen Überlapps in dem Verbindungsbereich zwischen einem jeweiligen Basisträgerelement und einem zugeordneten Zusatzträgerelement entspricht somit die Ausdehnung des resultierenden Türmodulträgers entlang der Fahrzeuglängsachse sowie entlang der vertikalen Fahrzeugachse jeweils der Ausdehnung des mindestens einen Basisträgerelementes entlang jener Richtung sowie der Ausdehnung etwaiger sich entlang der jeweils betroffenen Raumrichtung daran anschließender Zusatzträgerelemente.

Dabei kann insbesondere vorgesehen sein, dass das mindestens eine Basisträgerelement sowie mindestens ein hieran anzuordnendes Zusatzträgerelement gemeinsam einen plattenförmigen Türmodulträger bilden. Andererseits kann ein jeweiliges Zusatzträgerelement aber auch nur lokal vom zugeordneten Basisträgerelement abstehen.

Sofern der resultierende Türmodulträger zur Abdichtung eines großflächigen Ausschnittes oder gegebenenfalls mehrerer Ausschnitte einer Kraftfahrzeugtür, insbesondere in deren Türinnenhaut, dient, kann entlang des äußeren Umfanges des aus dem Zusammenbau mindestens eines Basisträgerelementes und gegebenenfalls mindestens eines hieran anzuordnenden Zusatzträgerelementes resultierenden Türmodulträger eine Dichtung umlaufen, über die der Türmodulträger (feuchtigkeitsdicht) an der Türinnenhaut einer Kraftfahrzeugtür anliegt.

Zur Bildung unterschiedlicher Türmodulträger aus mindestens einem Basisträgerelement sowie mindestens einem Zusatzträgerelement kann beispielsweise vorgesehen sein, ein Basisträgerelement jeweils mit unterschiedlich großen Zusatzträgerelementen zu kombinieren. Dabei kann auch bereits das Basisträgerelement für sich genommen einen vollständigen Türmodulträger bilden, der bei einer vergleichsweise kleinen Kraftfahrzeugtür zum Einsatz kommt. Zur Verwendung bei einer entsprechend größeren Kraftfahrzeugtür wird das Basisträgerelement dann mit mindestens einem zugeordneten Zusatzträgerelement kombiniert.

Weiterhin können auch mehrere, z. B. zwei, Basisträgerelemente vorgesehen sein, die bei jedem aus einem Bausatz zu bildenden Türmodulträger zur Anwendung kommen, wobei diese (mehreren) Basisträgerelemente jeweils mit unterschiedlichen Zusatzträgerelementen zu kombinieren sind. So kann beispielsweise ein Türmodulträger unmittelbar aus zwei aneinander anschließenden Basisträgerelementen gebildet werden, während ein weiterer Türmodulträger dadurch gebildet wird, dass zwischen den beiden Basisträgerelementen mindestens ein Zusatzträgerelement aufgenommen ist.

Die Verbindung der einzelnen Trägerelemente (Basisträgerelemente und Zusatzträgerelemente), aus denen ein jeweiliger Türmodulträger gebildet wird, kann in unterschiedlichster Weise erfolgen; hierfür kommt eine Vielzahl Fügetechniken in Betracht. So kann eine formschlüssige Verbindung zwischen den Trägerelementen vorgesehen sein, z. B. in Form einer Steckverbindung und/oder einer Rast- bzw. Clipsverbindung. Weiterhin sind kraftschlüssige Fügetechniken einsetzbar, wie z. B. Nieten oder Schrauben. Auch stoffschlüssige Fügetechniken können zur Anwendung kommen, so etwa Verschweißen, Kleben oder Heißverstemmen. Schließlich können einzelne Trägerelemente des Türmodulträgers auch einstückig aneinander angeformt sein, z. B. bei deren Herstellung durch (Spritz-)Gießen.

Weiterhin kommt auch eine Kombination der genannten Fügetechniken in Betracht, insbesondere eine Kombination einer formschlüssigen Verbindung (Steckverbindung) aneinander anschließender Trägerelemente mit zusätzlichen Fügetechniken. Hier sorgt die Steckverbindung für einen definierten Eingriff und eine definierte Positionierung der einander zugeordneten Trägerelemente; und zusätzliche form-, kraft- oder stoffschlüssige Fügemaßnahmen, wie z. B. Rasten, Nieten, Schrauben, Schweißen oder Heißverstemmen, gewährleisten dann eine feste Verbindung zwischen den Trägerelementen herbei.

Eine geeignete Steckverbindung kann beispielsweise über Steckerstifte und zugeordnete Steckeröffnungen oder über (kammartig) ineinandergreifende Vorsprünge und Vertiefungen (nach Art einer Verzahnung) realisiert werden.

Insbesondere wenn der aus einzelnen Trägerelementen zu bildende Türmodulträger einen Bestandteil einer Nass-/Trockenraumtrennung einer Kraftfahrzeugtür bildet, ist die Verbindung zwischen den einzelnen Trägerelementen des Türmodulträgers vorteilhaft feuchtigkeitsdicht auszugestalten, so dass keine zusätzlichen Dichtungsmaßnahmen erforderlich sind.

Wenn die Trägerelemente des Türmodulträgers durch Gießen, insbesondere Spritzgießen, hergestellt werden, z. B. bei einem aus Kunststoff bestehenden Türmodulträger, dann existieren beispielsweise folgende Möglichkeiten für die Herstellung der einzelnen Trägerelemente des Türmodulträgers: Zum einen können die einzelnen Trägerelemente separat in jeweils eigenen Werkzeugen hergestellt und anschließend in geeigneter Weise zur Bildung eines Türmodulträgers miteinander verbunden werden. Zum anderen können auch Wechseleinsätze eines Werkzeugs genutzt werden, um in diesem einen Werkzeug unterschiedliche Kombinationen von Trägerelementen herzustellen, die anschließend zu einem Türmodulträger zusammengefügt werden. Schließlich ist es auch möglich, insbesondere bei Nutzung von Wechseleinsätzen eines Werkzeugs, die unterschiedlichen Trägerelemente unmittelbar beim Spritzgießen aneinander anzuformen, um hierdurch einen Türmodulträger zu bilden.

Weitere Einzelheiten und Vorteile der Erfindung werden bei der nachfolgenden Beschreibung von Ausführungsbeispielen anhand der Figuren deutlich werden.

Es zeigen:
- Fig. 1A: eine Seitenansicht einer Türstruktur einer Kraftfahrzeugtür sowie eines an der Türstruktur anzuordnenden Türmoduls;
- Fig. 1B: eine Abwandlung der Anordnung aus Figur 1A hinsichtlich der Ausgestaltung der Türstruktur sowie des zugehörigen Türmoduls;
- Fig. 1C: eine Rückansicht des Türmoduls aus Figur 1B
- Fig. 2A: eine Seitenansicht eines Basisträgerelementes eines einteiligen Türmodulträgers, welcher durch ein Zusatzträgerelement ergänzbar ist;
- Fig. 2B: den Türmodulträger aus Figur 2A zusammen mit einer Türstruktur, in welche der Türmodulträger einbaubar ist;
- Fig. 2C: den Türmodulträger aus Figur 2B nach Bestückung mit Funktionskomponenten einer Kraftfahrzeugtür;
- Fig. 2D: den Türmodulträger aus Figur 2C zusammen mit den hieran vormontierten Funktionskomponenten, eingebaut in eine Türstruktur gemäß Figur 2B;
- Fig. 3A: eine Seitenansicht einer Türstruktur einer Kraftfahrzeugtür sowie eines an der Türstruktur anzuordnenden, aus zwei Trägerelementen bestehenden Türmodulträgers mit hieran vormontierten Funktionskomponenten;
- Fig. 3B: eine Abwandlung der Anordnung aus Figur 3A hinsichtlich der Ausgestaltung der Türstruktur sowie des zugehörigen Türmoduls;
- Fig. 4A: eine schematische Darstellung mehrerer einzelner Werkzeuge zur Herstellung je eines Trägerelemente eines Türmodulträgers zur Anwendung bei einer Anordnung der Figuren 3A und 3B;
- Fig. 4B: eine schematische Darstellung einheitlicher Werkzeuge zur Herstellung eines aus mehreren Trägerelementen bestehenden Türmodulträgers zur Anwendung bei einer Anordnung der Figuren 3A und 3B;
- Fig. 5A: eine Seitenansicht einer Türstruktur einer Kraftfahrzeugtür sowie eines an der Türstruktur anzuordnenden, aus zwei Trägerelementen bestehenden Türmodulträgers mit hieran vormontierten Funktionskomponenten;
- Fig. 5B: eine Abwandlung der Anordnung aus Figur 5A hinsichtlich der Ausgestaltung der Türstruktur sowie des zugehörigen Türmoduls;
- Fig. 6A: eine schematische Darstellung mehrerer einzelner Werkzeuge zur Herstellung je eines Trägerelemente eines Türmodulträgers zur Anwendung bei einer Anordnung der Figuren 5A und 5B;
- Fig. 6B: eine schematische Darstellung einheitlicher Werkzeuge zur Herstellung eines aus mehreren Trägerelementen bestehenden Türmodulträgers zur Anwendung bei einer Anordnung der Figuren 5A und 5B;
- Fig. 7A: eine Seitenansicht eines zweiteiligen Türmodulträgers aus einem Basis-und einem Zusatzträgerelement;
- Fig. 7B: den Türmodulträger aus Figur 7A zusammen mit einer Türstruktur, in welche der Türmodulträger einbaubar ist;
- Fig. 7C: den Türmodulträger aus Figur 7B nach Bestückung mit Funktionskomponenten einer Kraftfahrzeugtür;
- Fig. 7D: den Türmodulträger aus Figur 7C zusammen mit den hieran vormontierten Funktionskomponenten, eingebaut in eine Türstruktur gemäß Figur 7B;
- Fig. 8A: eine Seitenansicht eines weiteren zweiteiligen Türmodulträgers aus einem Basis- und einem Zusatzträgerelement;
- Fig. 8B: den Türmodulträger aus Figur 8A zusammen mit einer Türstruktur, in welche der Türmodulträger einbaubar ist;
- Fig. 8C: den Türmodulträger aus Figur 8B nach Bestückung mit Funktionskomponenten einer Kraftfahrzeugtür;
- Fig. 8D: den Türmodulträger aus Figur 8C zusammen mit den hieran vormontierten Funktionskomponenten, eingebaut in eine Türstruktur gemäß Figur 8B;
- Fig. 9A: ein Ausführungsbeispiel eines Verbindungsbereiches zwischen einem Basisträgerelement und einem Zusatzträgerelement eines Türmodulträgers;
- Fig. 9B: eine Abwandlung des Verbindungsbereiches aus Figur 9A;
- Fig. 10A: eine schematische Darstellung weiterer Kombinationsmöglichkeiten eines Basisträgerelementes mit einem Zusatzträgerelement zur Bildung eines Türmodulträgers;
- Fig. 10B: eine Abwandlung der Anordnung aus Figur 9A;
- Fig. 11A: eine Draufsicht auf einen Türmodulträger, der mindestens zwei Sätze von Befestigungsstellen zur Anordnung einer Führungsschiene in zwei unterschiedlichen Betriebspositionen aufweist;
- Fig. 11B: den Türmodulträger aus Figur 11A zusammen mit hieran in unterschiedlichen Befestigungspositionen vormontierten Führungsschienen;
- Fig. 12A: eine erste Möglichkeit der Anordnung zweier Führungsschienen an dem Türmodulträger aus Figur 11A;
- Fig. 12B: den Türmodulträger aus Figur 12A eingebaut in eine Türstruktur;
- Fig. 13A: eine zweite Möglichkeit der Anordnung zweier Führungsschienen an dem Türmodulträger aus Figur 11A;
- Fig. 13B: den Türmodulträger aus Figur 13A eingebaut in eine Türstruktur;
- Fig. 14A: eine detailliertere Ansicht eines Türmodulträgers mit zwei hieran befestigten Führungsschienen;
- Fig. 14B: einen Schnitt durch den Türmodulträger aus Figur 14A im Bereich einer Führungsschiene;
- Fig. 15A: eine weitere detaillierte Ansicht eines Türmodulträgers mit zwei hieran befestigten Führungsschienen;
- Fig. 15B: einen Schnitt durch den Türmodulträger aus Figur 15A im Bereich einer Führungsschiene.

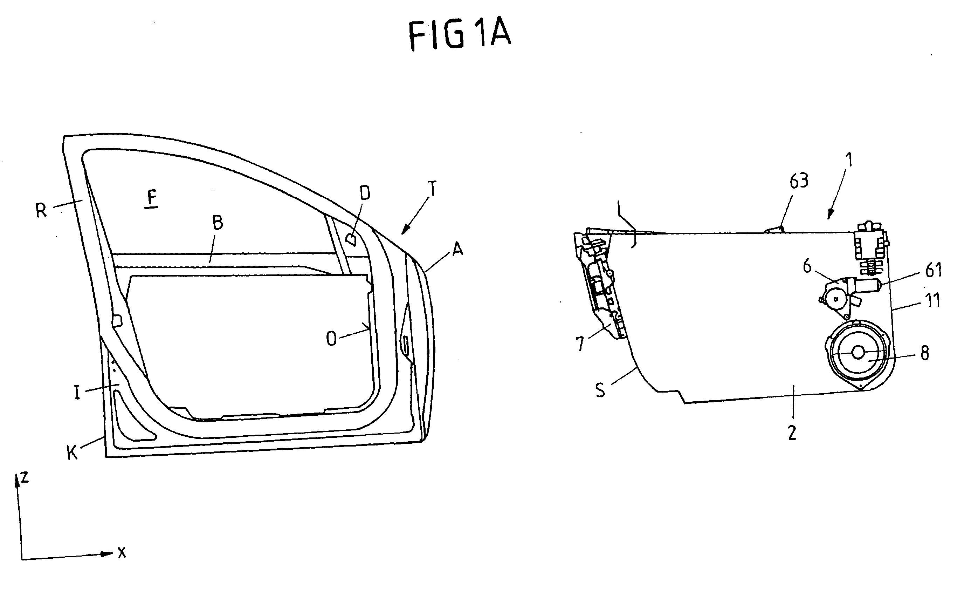

Figur 1A zeigt eine Türstruktur T einer Kraftfahrzeugtür, die einen Türkasten K sowie einen - entlang der vertikalen Fahrzeugachse z - oberhalb des Türkastens K angeordneten Fensterrahmen R aufweist, und zwar in einer Seitenansicht - bezogen auf den in ein Kraftfahrzeug eingebauten Zustand der Tür - vom Fahrzeuginnenraum her betrachtet.

Der Türkasten K wird in bekannter Weise gebildet durch eine die äußere Designfläche der Kraftfahrzeugtür definierende Türaußenhaut A, welche in Figur 1A nur ansatzweise erkennbar ist, da sie auf der dem Fahrzeuginnenraum abgewandten Seite der Türstruktur liegt, sowie durch eine mit einem großflächigen Ausschnitt O versehene Türinnenhaut I, welche auf der dem Fahrzeuginnenraum zugewandten Seite der Türstruktur liegt. Die Türaußenhaut A und die Türinnenhaut I sind in bekannter Weise über Versteifungselemente, z. B. in Form eines sogenannten Versteifungsrahmens, miteinander verbunden, vergleiche DE 10 2005 013 201 A1.

Zwischen der Türaußenhaut A und der Türinnenhaut I ist ein auch als Türschacht bezeichneter Raum ausgebildet, bei dem es sich um den sogenannten Nassraum der Fahrzeugtür handelt.

Der Türkasten K wird - entlang der vertikalen Fahrzeugachse z betrachtet - nach oben hin durch die sogenannte Türbrüstung B begrenzt, welche sich im Wesentlichen entlang der Fahrzeuglängsachse x erstreckt und an welche sich vorliegend nach oben hin ein Fensterrahmen R anschließt, welcher eine Fensteröffnung F umschließt.

Die Fensteröffnung F ist mittels einer Fensterscheibe verschlossen, welche sich durch einen Fensterheber entlang der vertikalen Fahrzeugachse z absenken lässt, um die Fensteröffnung F freizugeben. Hierbei wird die Fensterscheibe in den durch den Türkasten K definierten Türschacht bzw. Nassraum der Fahrzeugtür abgesenkt. Bei einem solchen Absenken der Fensterscheibe werden hieran haftende Flüssigkeitstropfen, z. B. Regentropfen, in den Türschacht bzw. Nassraum mitgenommen, so dass ich dort Feuchtigkeit bilden kann.

Damit im Nassraum der Fahrzeugtür befindliche Feuchtigkeit nicht in den Fahrzeuginnenraum eintreten kann, ist die Türinnenhaut I so auszugestalten, dass sie den zwischen Türaußenhaut und Türinnenhaut gelegenen Nassraum der Fahrzeugtür feuchtigkeitsdicht von dem Trockenraum des Kraftfahrzeugs trennt. Vorliegend ist hierzu der in der Türinnenhaut I gebildete großflächige Ausschnitt O mittels eines Türmodulträgers 1 feuchtigkeitsdicht zu verschließen. Hierzu kann der Türmodulträger 1 beispielsweise über eine entlang seines umlaufenden äußeren Randes 11 erstreckte Dichtung derart an der Türinnenhaut I anliegen, dass der Türmodulträger 1 den großflächigen Ausschnitt O der Türinnenhaut I vollständig überdeckt und dabei gleichzeitig über die erwähnte Dichtung feuchtigkeitsdicht an der Türinnenhaut I anliegt, vergleiche DE 196 22 310 A1 und DE 196 54 956 A1.

Der Türmodulträger 1 ist in Figur 1A separat von der Türstruktur T dargestellt; denn er kann unabhängig von jener Türstruktur T gefertigt und anschließend zusammen mit hieran vormontierten Funktionskomponenten 6, 7, 8 einer Kraftfahrzeugtür an der Türstruktur angeordnet und festgelegt werden, wobei er - wie beschrieben - den großflächigen Ausschnitt A der Türinnenhaut I überdeckt und verschließt.

Der Türmodulträger 1 kann beispielsweise aus Kunststoff oder aus Metall bestehen und wird vor seinem Einbau in die Türstruktur T mit Funktionskomponenten 6, 7, 8 einer Kraftfahrzeugtür bestückt, so dass der Türmodulträger 1 und die hieran vormontierten Funktionskomponenten 6, 7, 8 ein vorgefertigtes und gegebenenfalls vorprüfbares Türmodul bilden, welches sich in die Türstruktur T integrieren lässt. Dies eröffnet die Möglichkeit, eine Mehrzahl Funktionskomponenten einer Kraftfahrzeugtür unabhängig vom Fertigungsort der Türstruktur T zu montieren und hinsichtlich ihrer Funktion zu testen, bevor sie anschließend in einem Arbeitsgang gemeinsam in die Türstruktur T zu integrieren, indem der Türmodulträger 1 zusammen mit den hieran vormontierten Funktionskomponenten 6, 7, 8 an der Türstruktur T, genauer deren Türinnenhaut I, angeordnet und festgelegt wird. Von dem Türmodulträger 1 ist dabei in Figur 1A die dem Fahrzeuginnenraum, also dem Trockenraum, zugewandte Seite gezeigt.

Die am Türmodulträger 1 vormontierten Funktionskomponenten umfassen im Ausführungsbeispiel der Figur 1A einen Fensterheber 6, von dem in Figur 1A ein

Fensterheberantrieb 61 sowie eine Führungsschiene 63 erkennbar sind, und weiterhin ein Türschloss 7 sowie einen Lautsprecher 8. Neben diesen in Figur 1A beispielhaft gezeigten Funktionskomponenten können am Türmodulträger 1 noch weitere Elemente, wie z. B. ein Airbagmodul, eine (gegebenenfalls höhenverstellbare) Armstütze, Kabelstränge usw. vormontiert sein.

Der Türmodulträger 1 wird im Ausführungsbeispiel der Figur 1A durch ein einzelnes Basisträgerelement 2 gebildet, welches plattenförmig ausgestaltet ist und welches bei Anordnung an der Türstruktur T, genauer an deren Türinnenhaut I, den dortigen großflächigen Ausschnitt O vollständig überdeckt und verschließt.

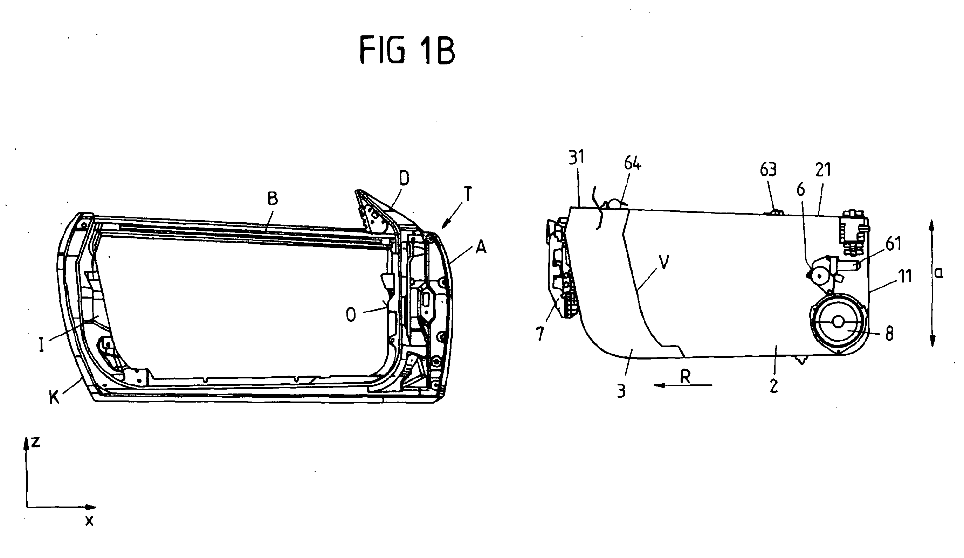

Figur 1 B zeigt eine Türstruktur T, welche sich von der in Figur 1 A dargestellten Türstruktur zum einen darin unterscheidet, dass es sich vorliegend um eine sogenannte rahmenlose Kraftfahrzeugtür handelt, welche oberhalb der Türbrüstung B keinen Fensterrahmen aufweist. Oberhalb der Türbrüstung B befindet sich dementsprechend bei der Türstruktur T der Figur 1 B lediglich ein Spiegeldreieck D. Weiterhin weist die in Figur 1 B dargestellte Türstruktur in Fahrzeuglängsrichtung x eine größere Ausdehnung auf als die in Figur 1 A gezeigte.

So kann es sich bei der Türstruktur T aus Figur 1 B beispielsweise um eine Türstruktur einer zweitürigen Cabriolet-Variante eines Kraftfahrzeugs handeln, welches auf derselben Plattform basiert wie dasjenige Kraftfahrzeug, für das die Türstruktur T einer Vordertür in Figur 1A dargestellt ist. Beispielsweise kann die in Figur 1A gezeigte Türstruktur eine Vordertür einer viertürigen Limousine einer bestimmten Fahrzeugplattform darstellen, während sich Figur 1 B auf die zweitürige Cabriolet-oder Coupe-Variante des entsprechenden Fahrzeugtyps bezieht.

Dabei zeichnen sich die zweitürigen Varianten eines bestimmten Fahrzeugtyps regelmäßig dadurch aus, dass deren Türen eine größere Ausdehnung in Fahrzeuglängsrichtung x aufweisen als die Vordertüren der entsprechenden Viertürer.

Wegen ihrer größeren Ausdehnung entlang der Fahrzeuglängsachse x weist die in Figur 1 B dargestellte Türstruktur T auch eine entsprechend größere Ausdehnung ihres großflächigen Ausschnittes O entlang jener Richtung x auf, der demgemäß von einem entsprechend größeren Türmodulträger 1 zu überdecken ist.

Der dementsprechend größere Türmodulträger 1 wird beim Ausführungsbeispiel der Figur 1 B gebildet durch ein Basisträgerelement 2, welches identisch ist mit dem Basisträgerelement 2, das den gesamten Türmodulträger 1 der Figur 1A bildet, und weiterhin durch ein Zusatzträgerelement 3, welches so an das Basisträgerelement 2 angefügt ist, dass es sich entlang der Fahrzeuglängsachse x hieran anschließt. Dementsprechend weist der Türmodulträger 1 aus Figur 1 B entlang der Fahrzeuglängsachse x eine Ausdehnung auf, die um die entsprechende Ausdehnung des Zusatzträgerelementes 2 größer ist als die Ausdehnung des Türmodulträgers 1 aus Figur 1A.

Die Ausführungsbeispiele der Figuren 1A und 1 B basieren somit auf einem Bausatz für einen modular aufgebauten Türmodulträger 1, bestehend aus mindestens einem Basisträgerelement 2 und mindestens einem Zusatzträgerelement 3, wobei das Basisträgerelement 2 in jedem der beiden unterschiedlichen Türmodulträger der Figuren 1A und 1B Verwendung findet, während das Zusatzträgerelement 3 als ein optionales Trägerelement nur beim Türmodulträger 1 der Figur 1B, also für das zweitürige Modell mit entsprechend längerer Türstruktur T, zur Anwendung kommt.

Das Basisträgerelement 2 und das Zusatzträgerelement 3 können als Bestandteile eines Bausatzes zur Herstellung eines Türmodulträgers 1 angesehen werden, in welchem das Basisträgerelement 2 einen zwingenden Bestandteil eines jeden mit diesem Bausatz hergestellten Türmodulträgers bildet und in welchem das Zusatzträgerelement 3 nur optional zur Bildung eines entsprechend größeren Türmodulträgers herangezogen wird.

Die Verbindung des Zusatzträgerelementes 3 mit dem Basisträgerelement 2 zur Bildung des entsprechend vergrößerten Türmodulträgers 1 aus Figur 1 B entlang eines hierfür vorgesehenen Verbindungsbereiches V kann auf unterschiedliche Weise erfolgen, wie weiter unten anhand zusätzlicher Ausführungsbeispiele noch erläutert werden wird.

Zweckmäßig ist insbesondere eine formschlüssige Verbindung zwischen den beiden Trägerelementen 2, 3, z. B. mittels einer Steckverbindung, so dass die beiden Trägerelemente 2, 3 in einfacher Weise durch Zusammenstecken definiert zueinander positioniert werden können. Für eine dauerhafte Fixierung der beiden Trägerelemente 2, 3 aneinander können dann noch zusätzliche Fügetechniken verwendet werden, wie z. B. eine Rast- oder Clipsverbindung, welche vorteilhaft in der Weise mit einer Steckverbindung kombinierbar ist, dass beim Zusammenstecken der beiden Trägerelemente 2, 3 zugleich auch eine Rast- bzw. Clipsverbindung zwischen den beiden Trägerelementen 2, 3 geschaffen wird. Es können aber auch weitere form- bzw. kraftschlüssige Fügetechniken, wie z. B. Nieten oder Schrauben, sowie stoffschlüssige Verbindungstechniken, wie z. B. Kleben, Schweißen und Heißverstemmen, angewandt werden.

Bei einer Herstellung der beiden Trägerelemente 2, 3 durch Gießen, insbesondere Spritzgießen, kann weiterhin vorgesehen sein, das Zusatzträgerelement 3 einstückig am Basisträgerelement 2 anzuformen.

Wie anhand Figur 1 B weiter deutlich wird, sind die beiden Trägerelemente 2, 3 also das Basisträgerelement 2 und das Zusatzträgerelement 3, derart zusammengefügt, dass sie im zusammengebauten Zustand eine einheitliche Trägerplatte bilden, mit einem umlaufenden äußeren Rand 11, der teilweise durch den äußeren Rand 21 des Basisträgerelementes 2 und teilweise durch den äußeren Rand 31 des Zusatzträgerelementes 3 gebildet wird. Im Übergangsbereich vom Basisträgerelement 2 zum Zusatzträgerelement 3 liegt dabei hier ein stetiger Verlauf des äußeren Randes 11 vor, d. h., der äußere Rand 21 des Basisträgerelementes 2 geht dort kontinuierlich in den äußeren Rand 31 des Zusatzträgerelementes 3 über. Insbesondere ist im Übergangsbereich vom Basisträgerelement 2 zum Zusatzträgerelement 3 die Ausdehnung a des resultierenden Türmodulträgers 1 quer zur Übergangsrichtung R, also vorliegend die Ausdehnung des Türmodulträgers 1 entlang der vertikalen Fahrzeugachse z, im Wesentlichen konstant.

D. h., im Übergangsbereich vom Basisträgerelement 2 zum Zusatzträgerelement 3 macht die Ausdehnung a des resultierenden Türmodulträgers 1 quer zur Übergangsrichtung R, also vorliegend die Ausdehnung a entlang der vertikalen Fahrzeugachse z, keinen Sprung; sondern die besagte Ausdehnung a ändert sich am Übergang vom Basisträgerelement 2 zum Zusatzträgerelement 3 allenfalls stetig. Betrachtet man also infinitesimal beabstandete Positionen entlang der Übergangsrichtung R vom Basisträgerelement 2 zum Zusatzträgerelement 3 so kommt es zwischen diesen allenfalls zur entsprechend kleinen Änderungen in der Ausdehnung a quer zur Übergangsrichtung R und nicht zu sprunghaften Änderungen der Ausdehnung a.

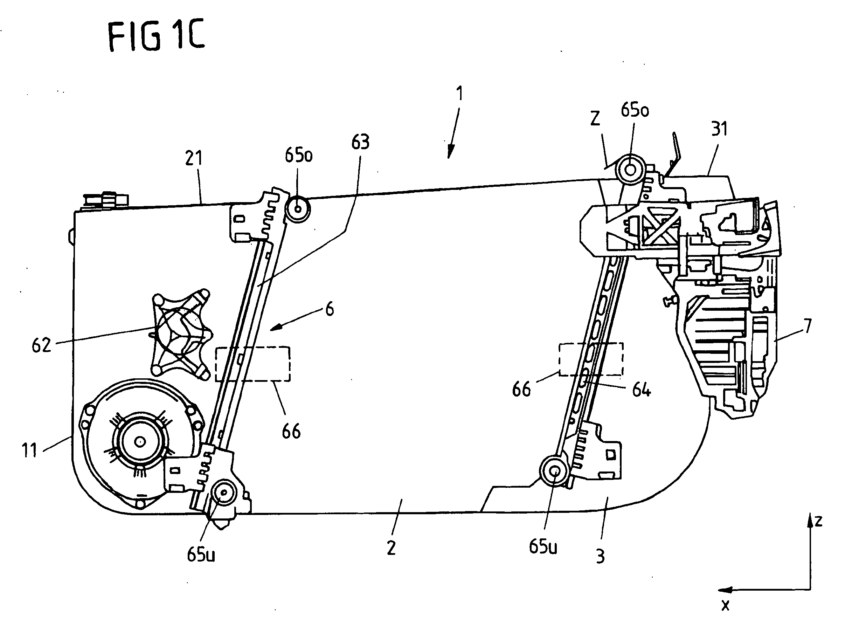

Die Bestückung des vergrößerten Türmodulträgers 1, bestehend aus dem Basisträgerelement 2 und dem Zusatzträgerelement 3, mit Funktionskomponenten 6, 7, 8 einer Kraftfahrzeugtür wird insbesondere anhand einer Zusammenschau der Figuren 1 B und 1C deutlich, wobei der von der Türstruktur T separate Türmodulträger 1 in Figur1 B in einer Seitenansicht vom Fahrzeuginnenraum her und in Figur 1C in einer Seitenansicht von der dem Fahrzeuginnenraum abgewandten Seite her dargestellt ist. Insbesondere anhand der Rückansicht der Figur 1C sind dabei - verglichen mit Figur 1A und 1B - weitere Einzelheiten des Aufbaus des Fensterhebers 6 erkennbar.

Der Fensterheber 6 ist hier als ein doppelsträngiger Fensterheber ausgestaltet, mit zwei entlang der Fahrzeuglängsachse x voneinander beabstandeten Führungsschienen 63, 64 zur Führung jeweils eines Mitnehmers entlang der Verstellrichtung einer mittels des Fensterhebers zu verstellenden Fensterscheibe; entsprechende Mitnehmer 66 sind in Figur 1C schematisch in strichpunktierter Linie angedeutet. Im oberen und unteren Endbereich jeder der beiden Führungsschienen 63, 64 ist jeweils ein oberes bzw. unteres Umlenkelement 65o, 65u, hier in Form je einer Umlenkrolle, vorgesehen, mittels dem ein flexibles Zugmittel Z des Fensterhebers, welches in Figur 1 c lediglich abschnittsweise angedeutet ist, derart umgelenkt werden kann, dass es sich im Bereich der Führungsschienen 63, 64 jeweils entlang der jeweiligen Führungsschiene 63 oder 64 erstreckt. Das Zugmittel Z dient dazu, einen an der jeweiligen Führungsschiene 63 oder 64 geführten Mitnehmer 66 jeweils entlang der Erstreckungsrichtung der Führungsschiene 63 oder 64 zu bewegen, um hierbei eine in bekannter Weise an den Mitnehmern festgelegte Fensterscheibe zu verstellen, vergleiche DE 196 19 087 A1.

Zur Betätigung des flexiblen Zugmittels Z, um hierüber eine Verstellkraft in die an den Führungsschienen 63, 64 geführten Mitnehmer 66 einzuleiten, dient ein Fensterheberantrieb 61, hier in Form eines elektromotorischen Antriebs, der gemäßFigur 1 B an der dem Fahrzeuginnenraum zugewandten Seite, also der trockenraumseitigen Oberfläche des Türmodulträgers 1 angeordnet ist. Das vom Antrieb 61 erzeugte Verstellmoment wird über ein Motorgetriebe, welches eine den Türmodulträger 1 durchgreifende Abtriebswelle aufweist, auf ein vor der dem Fahrzeuginnenraum abgewandten Seite, also an der nassraumseitigen Oberfläche des Türmodulträgers 1 angeordnetes Verstellgetriebe 62 übertragen, welches in bekannter Weise eine vom flexiblen Zugmittel Z umschlungene Seiltrommel drehend antreibt.

Ebenso wie das Verstellgetriebe 62 sind auch die beiden Führungsschienen 63, 64 des Fensterhebers 6 zusammen mit den hieran geführten Mitnehmern 66 an der nassraumseitigen Oberfläche des Türmodulträgers 1 angeordnet, um hiermit die zu verstellende Fensterscheibe in den Türschacht, also den Nassraum der Kraftfahrzeugtür, absenken zu können.

Wie anhand eines Vergleichs des in den Figuren 1B und 1C dargestellten Türmodulträgers 1 mit dem in Figur 1A dargestellten Türmodulträger deutlich wird, sind beim Türmodulträger 1 der Figuren 1B und 1C die zweite - entlang der Fahrzeuglängsachse x hintere - Führungsschiene 64 sowie das Türschloss 7 nun am Zusatzträgerelement 3 angeordnet, wohingegen sie beim Ausführungsbeispiel der Figuren 1A zusammen mit allen anderen dem Türmodul zugehörigen Funktionskomponenten der Fahrzeugtür am Basisträgerelement 2 angeordnet sind.

Ferner zeigt ein Vergleich der Figuren 1A und 1B, dass bei letzterer die Schlossbaugruppe 7 mit einer etwas anderen Orientierung (Neigung) am Türmodulträger 1 angebaut ist als im Fall der Figur 1A.

Dadurch, dass der Türmodulträger 1 aus dem Ausführungsbeispiel der Figur 1A und der Türmodulträger 1 aus dem Ausführungsbeispiel der Figuren 1 B und 1C jeweils in dem Basisträgerelement 2 übereinstimmen, kann an den entsprechenden Schnittstellen der Türstruktur T, über die das Basisträgerelement 1 an der Türinnenhaut I befestigt ist, eine identische Schnittstellengestaltung genutzt werden, wie es bei Fahrzeugen einer einheitlichen Plattform zweckmäßig ist.

Vorliegend bildet das Basisträgerelement .2 im Ausführungsbeispiel der Figuren 1 B und 1C den - in Fahrzeuglängsrichtung x betrachtet - vorderen und mittleren Teil des Türmodulträgers 1, an den sich nach hinten hin das Zusatzträgerelement 3 anschließt. Dementsprechend kann bei der Anordnung der Figur 1A einerseits und bei der Anordnung der Figuren 1B und 1C andererseits im vorderen Teil der jeweiligen Türstruktur T eine identische Schnittstelle zum jeweiligen Türmodulträger 1 genutzt werden. Alternativ kann natürlich das Basisträgerelement 2 auch den hinteren Teil des um ein Zusatzträgerelement 3 ergänzten Türmodulträgers 1 bilden.

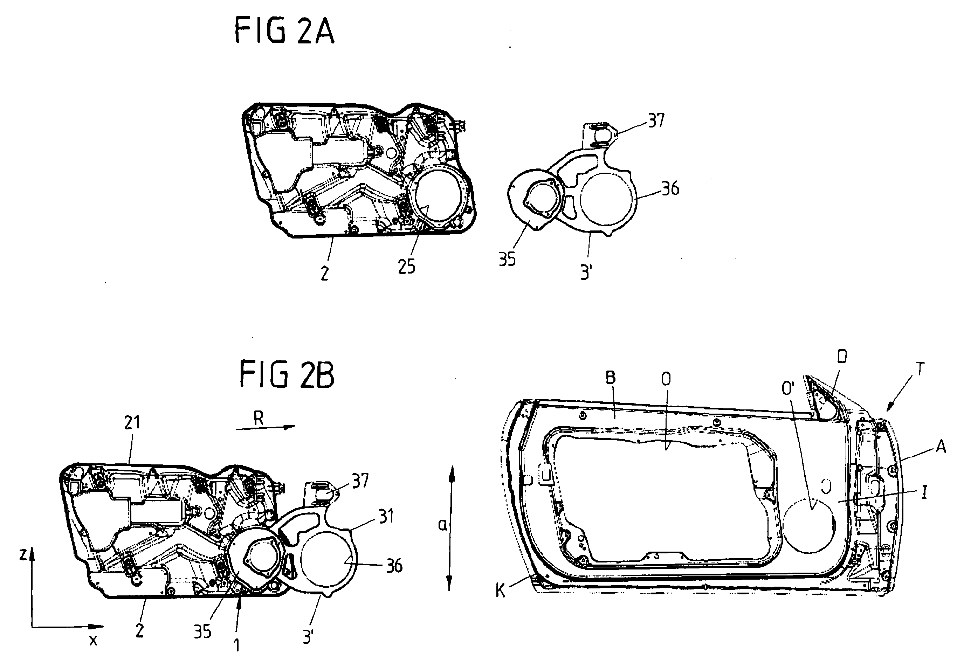

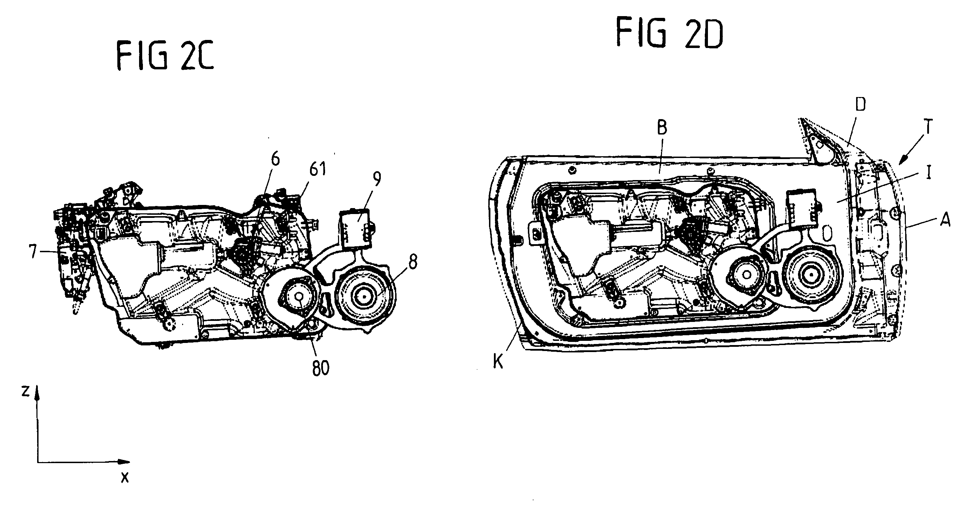

In den Figuren 2A bis 2D ist eine Abwandlung der Anordnungen aus den Figuren 1A bis 1C dargestellt, gemäß der zur Anpassung eines Türmodulträgers 1 an eine in Fahrzeuglängsrichtung x vergrößerte Fahrzeugtür, zum Beispiel in Form einer rahmenlosen Türstruktur T eines Cabriolet-Fahrzeugs, ein Basisträgerelement 2 mit einem Zusatzträgerelement 3' kombiniert wird, welches geometrisch derart ausgestaltet ist, das es zusammen mit dem Basisträgerelement 2 keine einheitliche Trägerplatte mit stetig umlaufendem äußeren Rand bildet. Vielmehr macht die Ausdehnung a des resultierenden Türmodulträgers 1 im Übergangsbereich vom Basisträgerelement 2 zum Zusatzträgerelement 3' einen Sprung; d. h. die Ausdehnung a wird beim Übergang vom Basisträgerelement 2 zum Zusatzträgerelement 3 sprunghaft (unstetig) reduziert.

Das Zusatzträgerelement 3' weist einen Verbindungsabschnitt 35 auf, über den es mit dem Basisträgerelement 2 verbunden wird. Der Verbindungsabschnitt 35 dient dabei gleichzeitig zum Verschließen einer Lautsprecheröffnung 25 des Basisträgerelementes 2.

Der bei der vergleichsweise kürzeren Version der Kraftfahrzeugtür (für die allein das Basisträgerelement 2 den Türmodulträger bildet) in jener Lautsprecheröffnung 25 vorgesehene Lautsprecher 8, zum Beispiel in Form eines Tieftöners, wird nun in einer Lautsprecheröffnung 36 des Zusatzträgerelementes 3' untergebracht. Der Lautsprecheröffnung 25 des Basisträgerelementes 2 kann stattdessen ein weiterer Lautsprecher 80, zum Beispiel in Form eines Mitteltöners, zugeordnet sein. Das Zusatzträgerelement 37 weist weiterhin einen Tragabschnitt 37 zur Aufnahme eines Türsteuergerätes 9 auf.

Ein weiterer Unterschied zwischen dem Ausführungsbeispiel der Figuren 2A bis 2D und den Anordnungen der Figuren 1A bis 1C besteht darin, dass vorliegend der resultierende Türmodulträger 1 nicht nur - wie im Fall der Figuren 1B und 1C - einen einzigen großflächigen Ausschnitt O der Türinnenhaut I überdeckt (und zwar durch das Basisträgerelement und das Zusatzträgerelement gemeinsam) sondern das hier vielmehr das Basisträgerelement 2 einerseits und das Zusatzträgerelement 3' andererseits jeweils einen Ausschnitt O bzw. O' in der Türinnenhaut überdecken und dicht verschließen.

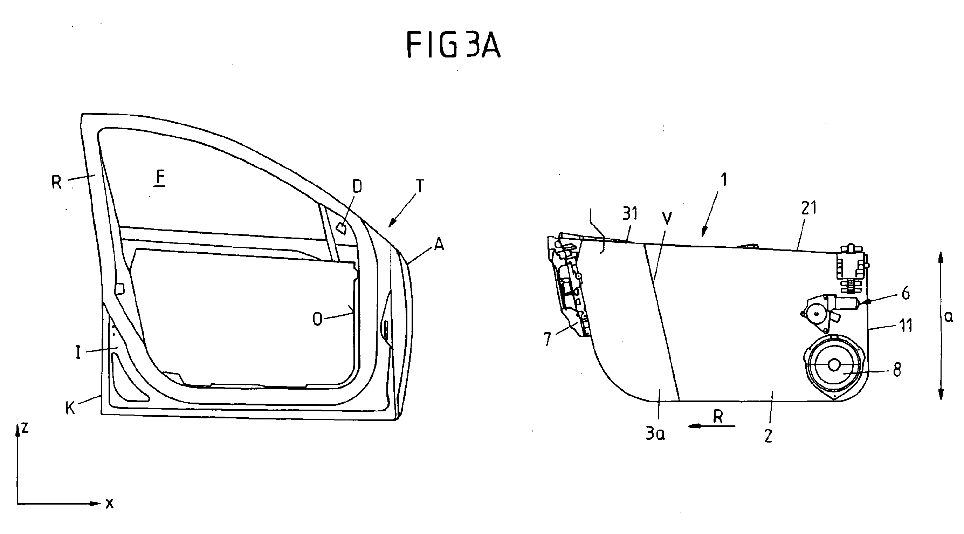

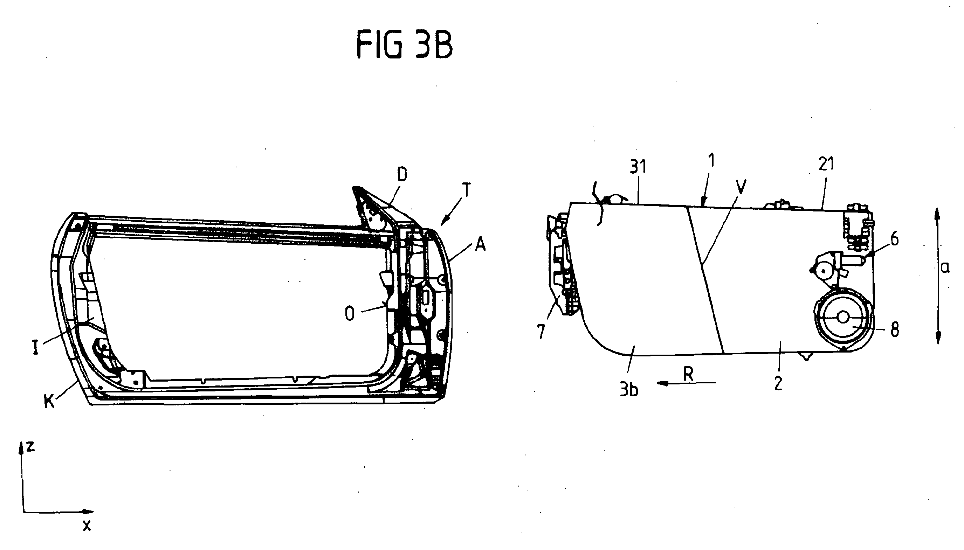

In den Figuren 3A und 3B ist eine Abwandlung der Anordnungen aus den Figuren 1A bis 1C dargestellt, gemäß welcher zur Anpassung eines Türmodulträgers 1 an eine jeweilige Türstruktur T, insbesondere auf der Grundlage einer einheitlichen FahrzeugPlattform, ein Basisträgerelement 2 wahlweise mit einem ersten Zusatzträgerelement 3a oder einem zweiten Zusatzträgerelement 3b kombiniert, die sich insbesondere in ihrer Ausdehnung entlang der Fahrzeuglängsachse x - bezogen auf den eingebauten Zustand in die jeweils zugeordnete Türstruktur T - unterscheiden.

Vorliegende wird also der Bausatz, aus dem das jeweilige resultierende Türmodul 1 gefertigt wird, gebildet durch ein Basisträgerelement 2 sowie zwei Zusatzträgerelemente 3a, 3b, von den jeweils wahlweise das eine oder andere mit dem Basisträgerelement 2 kombiniert wird, um ein an die jeweilige Türstruktur T angepasstes Türmodul 1 zu schaffen.

In Übereinstimmung mit den Anordnungen der Figuren 1A bis 1C wird dabei der resultierende Türmodulträger 1 jeweils durch eine Trägerplatte gebildet, die einen stetig umlaufenden äußeren Rand 11, gebildet durch die äußeren Ränder 21, 31 der beiden jeweiligen Trägerelemente 2, 3a beziehungsweise 2, 3b, aufweist. Insbesondere ist im Verbindungsbereich V zwischen dem Basisträgerelement 2 und dem jeweiligen Zusatzträgerelement 3a beziehungsweise 3b eine stetiger Übergang vorgesehen - ohne einen Sprung in der Ausdehnung a senkrecht zur Übergangsrichtung R.

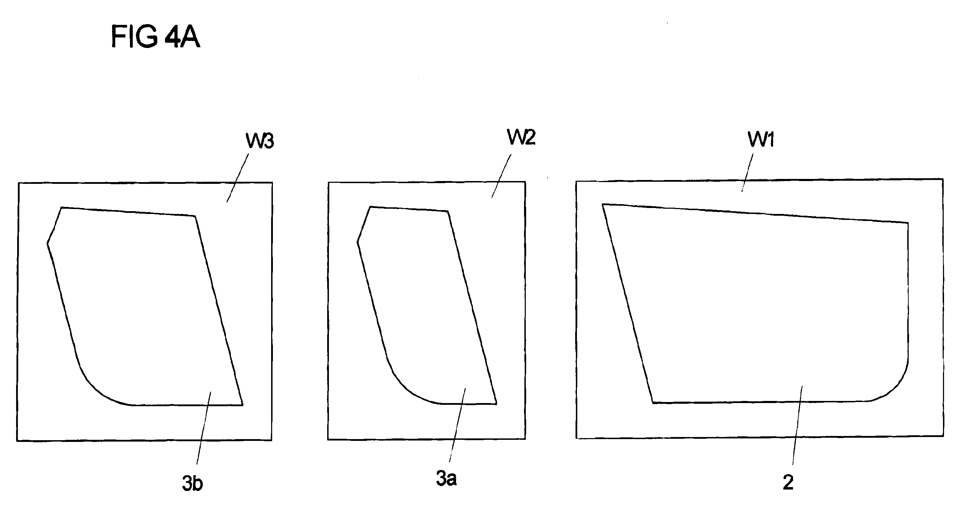

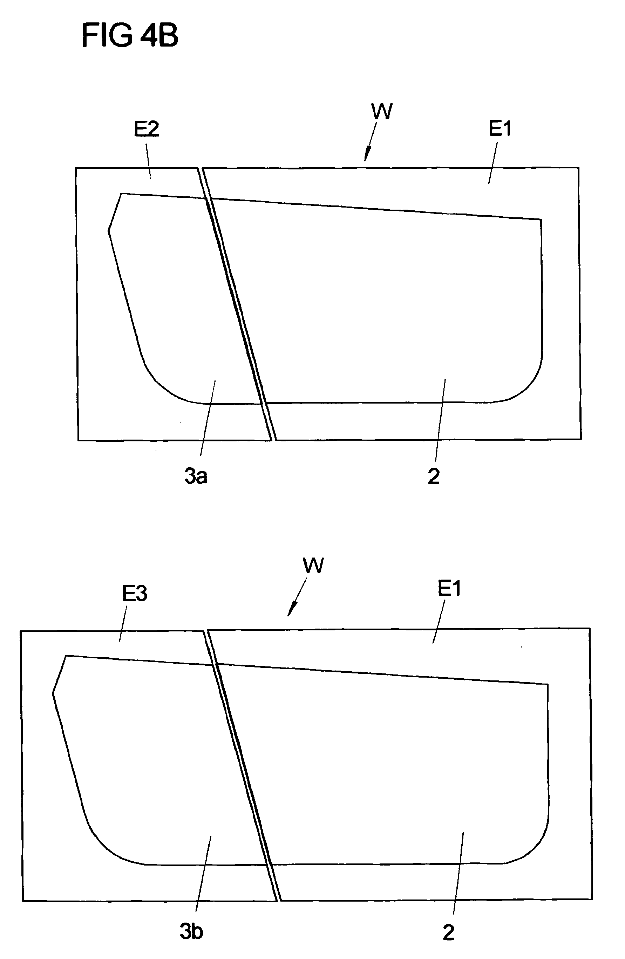

Bei dem Basisträgerelement 2 und den Zusatzträgerelementen 3a, 3b kann es sich insbesondere jeweils um Kunststoffkomponenten handeln, die in einfacher Weise durch Gießen (Spritzgießen) hergestellt sind. Gemäß Figur 4A können dabei die drei Trägerelemente 2, 3a, 3b jeweils separat mit einem eigenen Gusswerkzeug W1, W2 bzw. W3, also einer eigenen Gussform, hergestellt werden. Alternativ kann gemäß Figur 4B vorgesehen sein, dass Basisträgerelement und das jeweils zugeordnete Zusatzträgerelement 3a oder 3b in einem Gusswerkzeug W mit eine einheitlichen Gussform herzustellen, wobei die jeweilige Gussform durch die Verwendung von Wechseleinsätzen E2 oder E3 für das jeweilige Zusatzträgerelement 3a oder 3b angepasst wird. Der für das Basisträgerelement 2 zu verwendende Einsatz E1 bleibt dabei unverändert.

Im letztgenannten Fall wird das jeweilige Zusatzträgerelement 3A oder 3B jeweils beim Spritzgießen einstückig an das zugeordnete Basisträgerelement 2 angeformt. Im Fall der Figur 4A erfolgt demgegenüber eine nachträgliche Verbindung des jeweiligen Zusatzträgerelementes 3a oder 3b mit dem Basisträgerelement 2 nach der Herstellung der Trägerelemente 2, 3a, 3b durch Spritzgießen, wie weiter unten anhand eines zusätzlichen Ausführungsbeispieles noch näher erläutert werden wird.

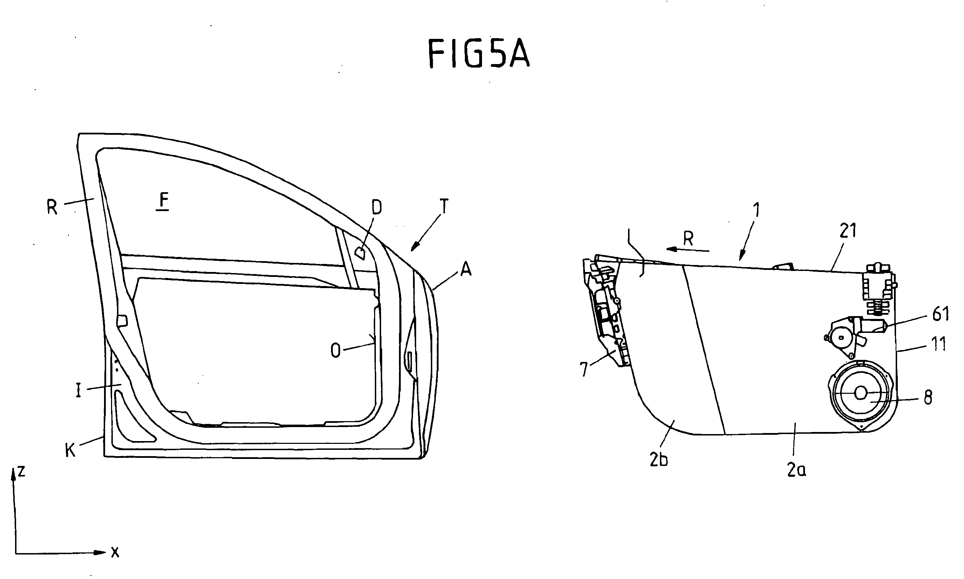

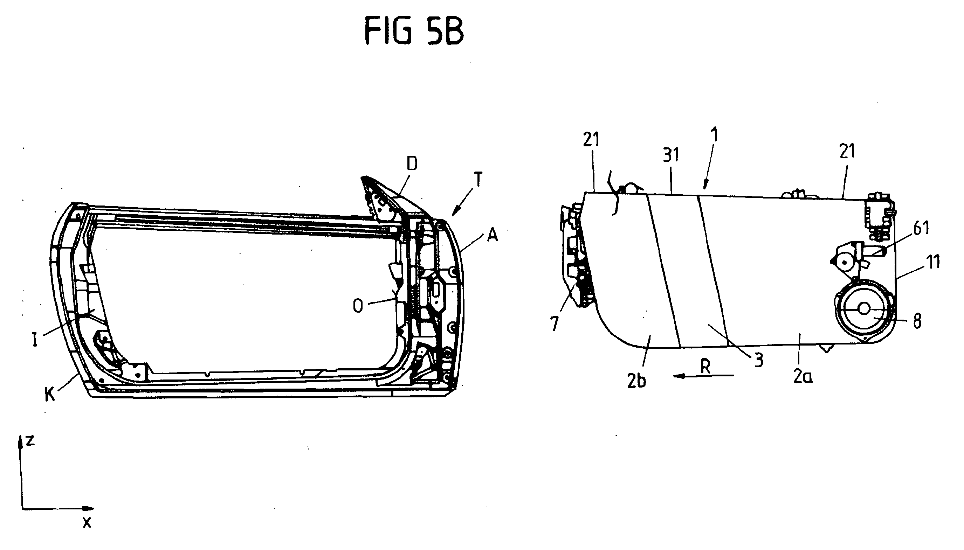

Gemäß den Figuren 5A und 5B weist ein an unterschiedliche Türstrukturen T anpassbarer Türmodulträger 1 zwei Basisträgerelemente 2a, 2b auf, die einen zwingenden Bestandteil des jeweiligen Türmodulträgers 1 bilden, sowie ein Zusatzträgerelement 3, welches optional mit den beiden Basisträgerelementen 2a, 2b verbindbar ist, und zwar durch Einfügen zwischen die beiden Basisträgerelemente 2a, 2b, welche entlang der Fahrzeuglängsachse x aneinander anschließen, so dass hierdurch die Ausdehnung des Türmodulträgers entlang der Fahrzeuglängsachse x vergrößert werden kann, entsprechend dem Übergang der Anordnung aus Figur 5A zu der Anordnung aus Figur 5B.

In diesem Fall besteht also der Bausatz, aus dem die unterschiedlichen resultierenden Türmodulträger 1 gebildet werden können, aus zwei Basisträgerelementen 2a, 2b und einem Zusatzträgerelement 3, wobei die beiden Basisträgerelemente 2a, 2b in jedem resultierenden Türmodulträger 1 zum Einsatz kommen und das Zusatzträgerelement 3 nur optional eingesetzt wird, um den Türmodulträger 1 an eine in Fahrzeuglängsachse x verlängerte Türstruktur mit entsprechend größerem Ausschnitt O anzupassen, vergleiche die unterschiedliche Geometrie der Türstrukturen T aus Figur 5A einerseits und Figur 5B andererseits.

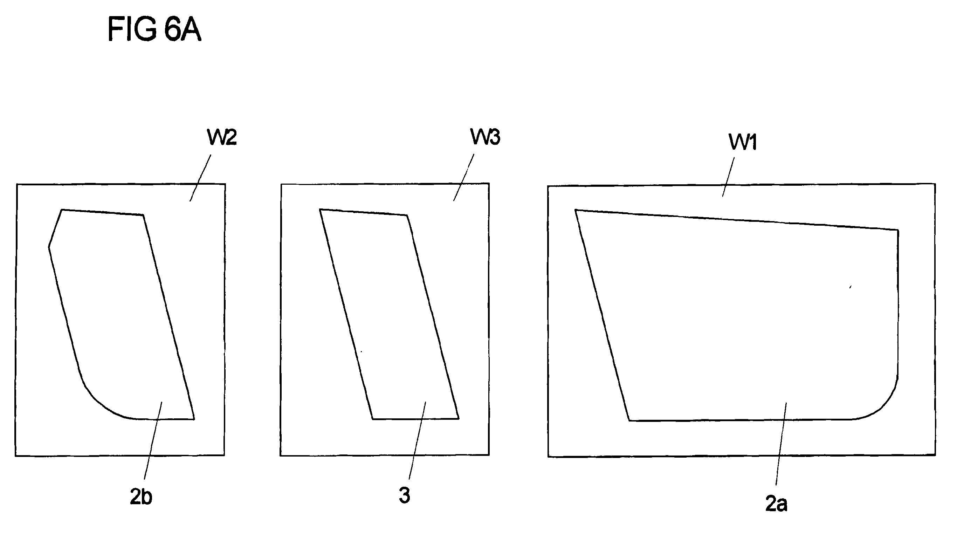

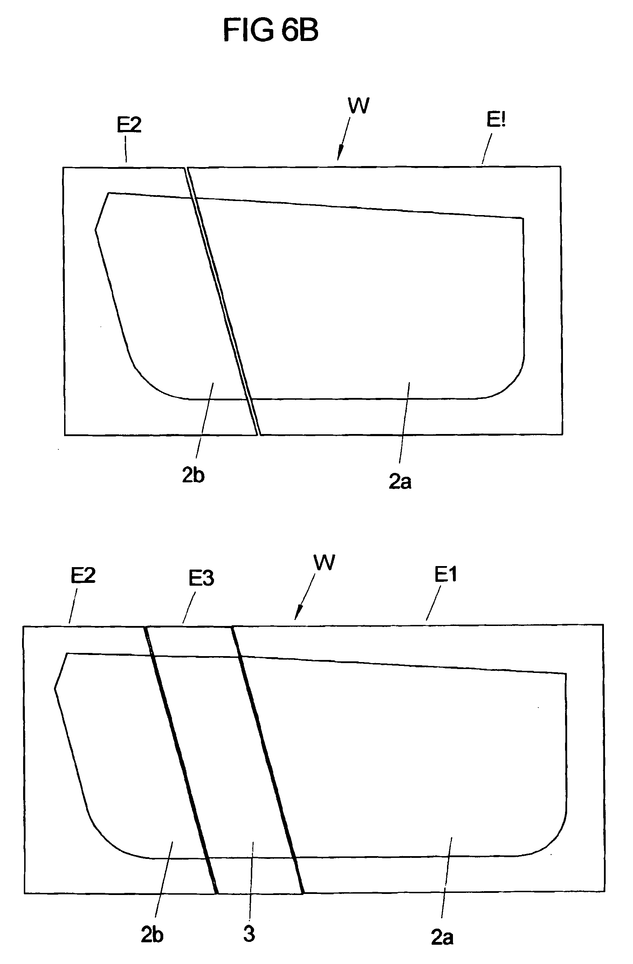

Auch hier können die einzelnen Trägerelemente 2a, 2b, 3 einerseits mit separaten Gusswerkzeugen W1, W2, W3 hergestellt werden, wie in Figur 6A gezeigt; oder es kann gemäß Figur 6B ein einheitliches Gusswerkzeug W vorgesehen sein, das als Grundbestandteil die Einsätze E1, E2 für die beiden Basisträgerelemente 2a, 2b aufweist und in das optional zwischen jene beiden Einsätze E1, E2 ein dritter Einsatz E3 für das Zusatzträgerelement 3 einsetzbar ist.

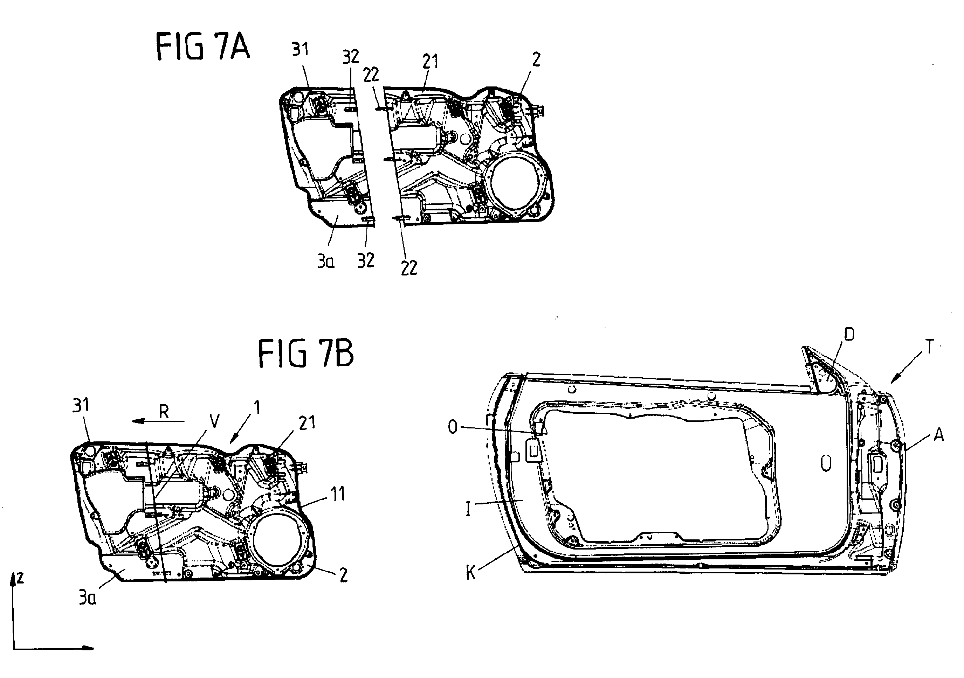

Figuren 7A und 7B zeigen in Anlehnung an Figur 3A einen zum Einbau in eine Türstruktur T vorgesehenen Modulträger 1, der aus einem Basisträgerelement 2 und einem Zusatzträgerelement 3a besteht, wobei hier zusätzlich Verbindungsmittel 22, 32 in Form von Steckerstiften 22 und Steckeröffnungen 32 dargestellt sind, über die das Basisträgerelement 2 nach Art einer Steckverbindung mit dem Zusatzträgerelement 3a verbindbar ist.

Die Verbindung von Basisträgerelement 2 und Zusatzträgerelement 3a erfolgt in einem Verbindungsbereich V durch Zusammenstecken der beiden Trägerelemente 2, 3a entlang einer Fügerichtung, die - bezogen auf den in eine Türstruktur T eingebauten Zustand - mit der Fahrzeuglängsachse x zusammenfällt. In dem in Figur 7B gezeigten zusammengefügten Zustand schließt vorliegend das Zusatzträgerelement 3a entlang der Fahrzeuglängsachse x an das Basisträgerelement 2 an, so dass die Gesamtausdehnung des resultierenden Türmodulträgers 1 entlang der Fahrzeuglängsachse x durch die Summe der Ausdehnungen des Basisträgerelementes 2 und des Zusatzträgerelementes 3a entlang jener Richtung x gegeben ist.

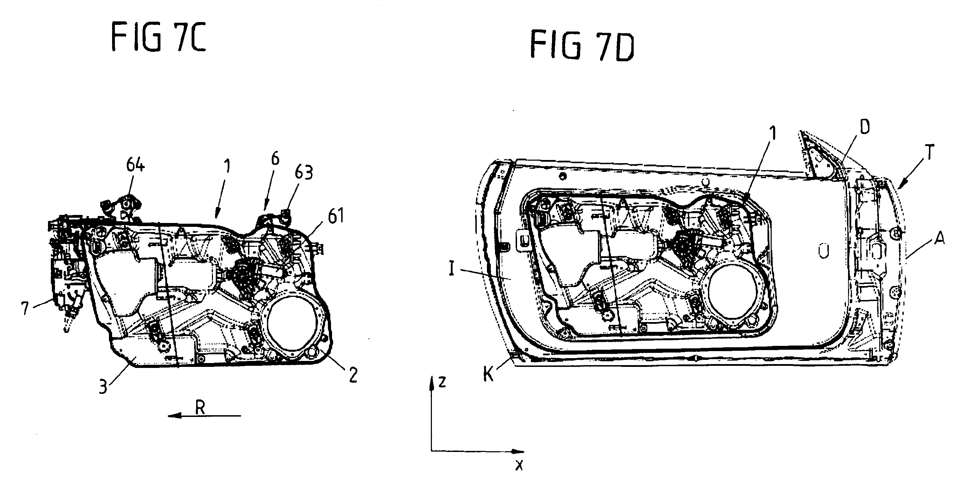

Figur 7C zeigt den resultierenden Türmodulträger 1 zusammen mit hieran vormontierten Funktionskomponenten, wie z. B. einem Antrieb 61 und Führungsschienen 63, 64 eines Fensterhebers 6 und einer Schlossbaugruppe 7.

Das aus dem Türmodulträger 1 und den hieran vormontierten Funktionskomponenten 6, 7 bestehende Türmodul wird in eine Türstruktur T eingebaut, so dass es deren großflächigen Ausschnitt O (vergleiche Figur 7B) überdeckt und als Bestandteil der Türinnenhaut I zur Nass-/Trockenraumtrennung beiträgt, wie in Figur 7D erkennbar.

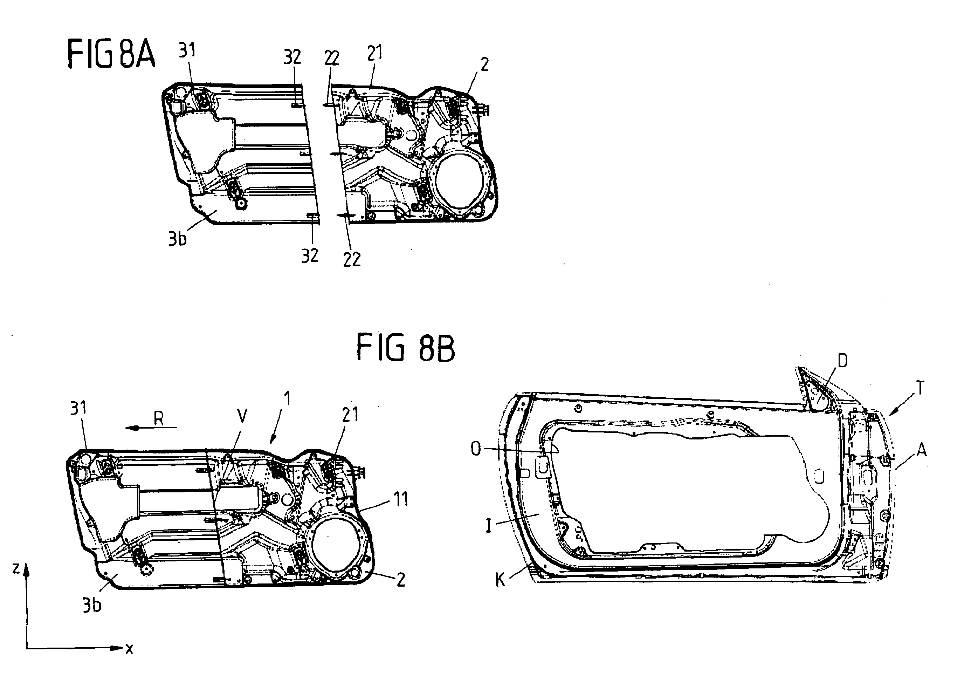

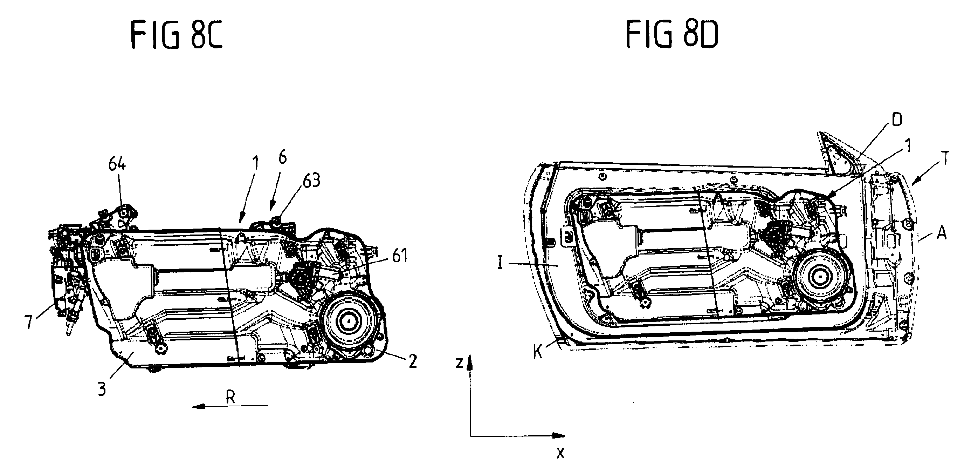

Die Figuren 8A bis 8D zeigen eine den Figuren 7A bis 7D entsprechende Anordnung, wobei hier anstelle des Zusatzträgerelementes 3a aus den Figuren 7A bis 7D ein Zusatzträgerelement 3b mit einer größeren Ausdehnung entlang der Fahrzeuglängsachse x verwendet wird, ähnlich wie beim Übergang der Anordnung gemäß Figur 3A zur Anordnung gemäß Figur 3B. Hierdurch wird der resultierende Modulträger an eine größere Ausdehnung einer Türstruktur T und insbesondere des mit dem Modulträger 1 zu überdeckenden großflächigen Ausschnittes O der Türstruktur T angepasst.

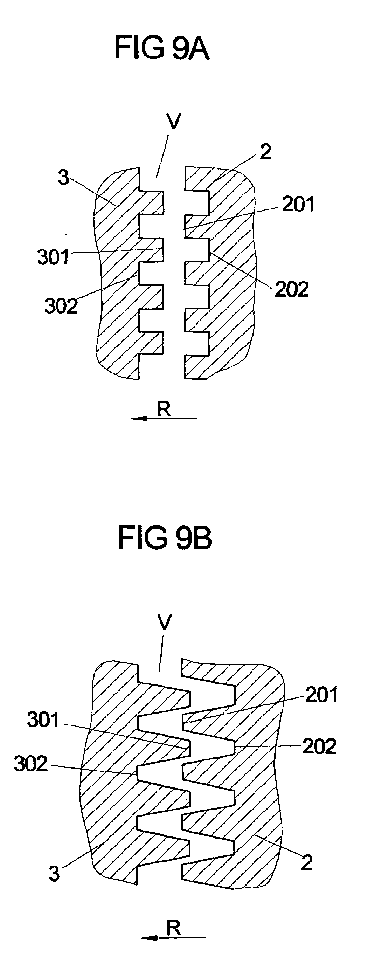

Figur 9A zeigt ein weiteres Ausführungsbeispiel für die Ausgestaltung eines Verbindungsbereiches V zwischen einem Basisträgerelement 2 und einem Zusatzträgerelement 3 auf der Grundlage einer formschlüssigen Verbindung. Hierzu sind an einander zugeordneten Randabschnitten des Basisträgerelementes 2 einerseits und des Zusatzträgerelementes 3 andererseits jeweils (kamm- bzw. verzahnungsartige) Formschlussbereiche 201, 202 bzw. 301, 302 ausgebildet, die jeweils aus einer Mehrzahl (zahnartiger) Vorsprünge 201 bzw. 301 und dazwischen liegender Ausnehmungen bzw. Lücken 202 bzw. 302 bestehen. Zur Herstellung einer formschlüssigen Verbindung (Steckverbindung) zwischen dem Basisträgerelement 2 und dem Zusatzträgerelement 3 werden die beiden Formschlussbereiche 201, 202; 301, 302 entlang der Füge- bzw. Übergangsrichtung R miteinander in Eingriff gebracht, so dass die jeweiligen Vorsprünge 201, 301 in die zugeordneten Ausnehmungen 302, 202 eingreifen. Durch eine solche Steckverbindung sind die beiden Trägerelemente 2, 3 definiert zueinander positioniert.

Für eine dauerhafte Fixierung können zusätzliche Fügetechniken zur Anwendung kommen, z. B. durch eine Ausgestaltung der Steckverbindung als selbstrastende Verbindung unter Verwendung entsprechender Rast- bzw. Clipselemente. Weiterhin können die beiderseitigen Formschlussbereiche durch Kleben, Schweißen oder Anschmelzen/Heißverstemmen der Formschlussbereich fest aneinander gehalten werden.

Es können aber auch zusätzliche Befestigungselemente, wie z. B. Schrauben oder Niete verwendet werden, um die beiden Trägerelemente 2, 3 in ihrer zusammengesteckten Lage zu halten.

Figur 9B zeigt eine Abwandlung der Steckverbindung aus Figur 9A, wobei hier die Steckerelemente 201, 202 bzw. 301, 302, also die jeweiligen Vorsprünge 201, 301 und Ausnehmungen 202, 302, jeweils eine größere Ausdehnung (Länge) entlang der Fügerichtung R aufweisen. Hierdurch lässt sich die Knicksteifigkeit der Verbindung verbessern.

Insbesondere wenn der resultierende Türmodulträger 1 einen Bestandteil einer Nass-/Trockenraumtrennung einer Kraftfahrzeugtür bildet, ist die Verbindung zwischen den Trägerelementen 2, 3 so auszulegen, dass sie feuchtigkeitsdicht, zumindest aber spritzwasserdicht wird.

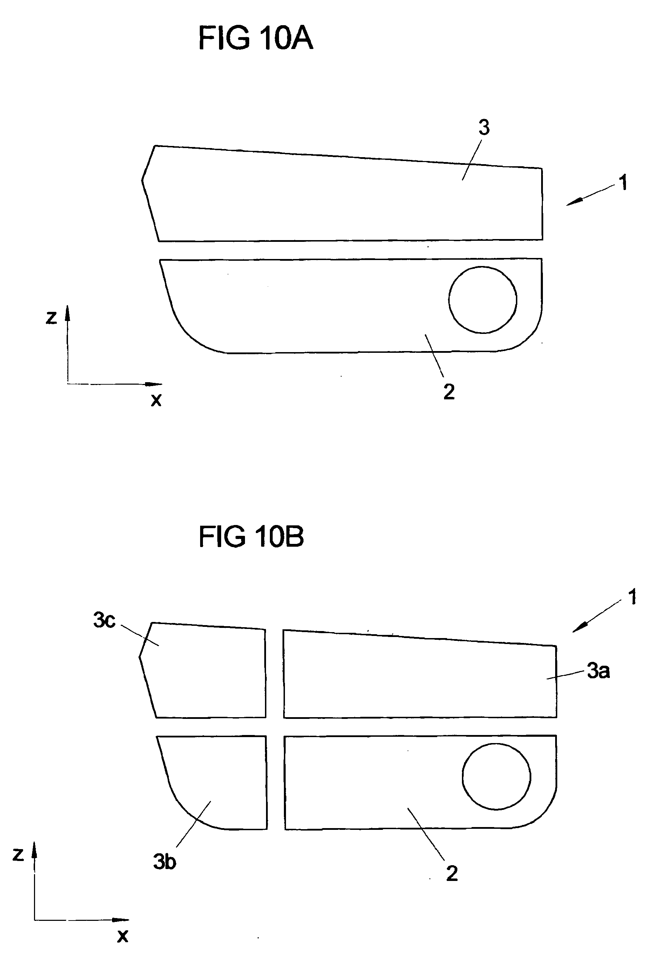

Wie anhand Figur 10A deutlich wird, müssen ein Basisträgerelement 2 und ein Zusatzträgerelement 3 zur Bildung eines resultierenden Türmodulträgers 1 nicht zwingend entlang der Fahrzeuglängsachse x hintereinander angeordnet sein, um die Ausdehnung des Türmodulträgers 1 entlang jener Richtung x variabel gestalten zu können; vielmehr können das Basisträgerelement 2 und ein Zusatzträgerelement 3 auch entlang der vertikalen Fahrzeugachse z aneinander anschließen (hintereinander angeordnet sein), um entlang dieser Richtung z eine variable Ausdehnung des Türmodulträgers 1 zu ermöglichen, je nach dem ob bzw. welches Zusatzträgerelement verwendet wird.

Gemäß Figur 10B können schließlich auch ein Basisträgerelement 2 und Zusatzträgerelemente 3a, 3b, 3c so kombiniert werden, dass die Ausdehnung des resultierenden Türmodulträgers 1 sowohl entlang der Fahrzeuglängsachse x als auch entlang der vertikalen Fahrzeugachse z variabel an unterschiedliche Türstrukturen und deren großflächige Ausschnitte anpassbar ist.

Wie anhand der Figuren 1A bis 1C bereits erläutert wurde, bietet die variable Ausgestaltung eines Türmodulträgers 1 unter Verwendung mindestens eines Basisträgerelementes 2 sowie mindestens eines Zusatzträgerelementes 3 insbesondere auch die Möglichkeit, die am resultierenden Türmodulträger 1 anzuordnenden Funktionskomponenten in unterschiedlichen Positionen am Türmodulträger 1 zu platzieren. So ist bei den Anordnungen der Figuren 1A bis 1C die zweite, in Fahrzeuglängsrichtung x hintere Führungsschiene 64 in dem in Figur 1A dargestellten Fall, in dem der Türmodulträger 1 lediglich aus dem Basisträgerelement 2 besteht, wie alle anderen Funktionskomponenten der Fahrzeugtür an jenem Basisträgerelement 2 angeordnet. Bei der Ausgestaltung des Türmodulträgers 1 gemäß den Figuren 1B und 1C, wonach dieser aus dem Basisträgerelement 2 und dem sich hieran entlang der Fahrzeuglängsrichtung x anschließenden Zusatzträgerelement 3 besteht, ist die besagte zweite Führungsschiene 64 demgegenüber am Zusatzträgerelement 3 angeordnet. Da sich das Zusatzträgerelement 3 entlang der Fahrzeuglängsachse x an das Basisträgerelement 2 anschließt, bedeutet dies, dass die zweite Führungsschiene 64 bei der Ausgestaltung des resultierenden Türmoduls gemäß den Figuren 1 B und 1C - verglichen mit der Ausgestaltung gemäß Figur 1A - entlang der Fahrzeuglängsachse x versetzt angeordnet ist.

Entsprechendes gilt für die weiteren vorstehend beschriebenen Ausführungsbeispiele, bei denen die Ausdehnung des jeweiligen Türmodulträgers 1 in Fahrzeuglängsrichtung x durch Verwendung von Zusatzträgerelementen 3, 3a, 3b variabel ist, so dass sich unterschiedliche Anordnungen mindestens einer der Führungsschienen 63, 64 in Fahrzeuglängsrichtung x ergeben.

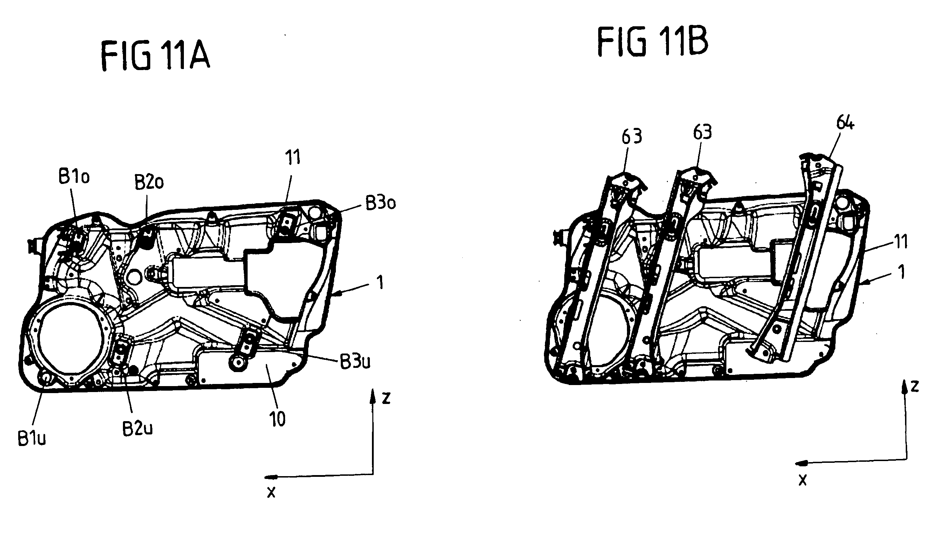

Das Konzept, für eine Führungsschiene eines Kraftfahrzeugfensterhebers mehrere Befestigungsstellen vorzusehen, so dass die Führungsschiene in einer jeweiligen Betriebsposition in unterschiedlichen Stellungen am Türmodulträger angeordnet werden kann, insbesondere in Fahrzeuglängsrichtung x versetzt (parallelverschoben) in unterschiedlichen Positionen, ist allgemein auch bei Türmodulträgern anwendbar, bei denen keine variable Ausdehnung in Fahrzeuglängsrichtung x vorgesehen ist, bzw. bei einem einzelnen Trägerelement, z.B. dem Basisträgerelement eines mehrteiligen Modulträgers. Dies wird nachfolgend anhand der Figuren 11A ff. näher erläutert werden.

In Figur 11A ist ein durch eine von einem umlaufenden äußeren Rand 11 begrenzte Trägerplatte 10 gebildeter Türmodulträger 1 dargestellt, der insgesamt drei Sätze (hier in Form dreier Paare) von Befestigungsstellen B1, B2, B3 zur Befestigung je einer Führungsschiene am Türmodulträger 1 aufweist.

Die ersten beiden Sätze bzw. Paare an Befestigungsstellen B1, B2 dienen dabei zur wahlweisen Befestigung einer in Fahrzeuglängsrichtung x vorderen Führungsschiene 63 eines Fensterhebers am Türmodulträger 1 in zwei unterschiedlichen Positionen, die entlang der Fahrzeuglängsrichtung x zueinander versetzt sind, vergleiche Figur 11 B. Ein dritter Satz bzw. ein drittes Paar an Befestigungsstellen B3 dient demgegenüber zur Befestigung einer zweiten, in Fahrzeuglängsrichtung x hinteren Führungsschiene 64.

Jeder Satz bzw. jedes Paar an Befestigungsstellen B1, B2, B3 besteht dabei jeweils aus einer entlang der vertikalen Fahrzeugachse z oberen Befestigungsstelle B1o, B2o, B3o und einer unteren Befestigungsstelle B1 u, B2u, B3u, wobei die eine (untere) Befestigungsstelle B1u gegenüber den anderen Befestigungsstellen B1o, B2o, B3o; b2u, B3u abweichend ausgestaltet ist und sich z.B. für eine so genannte Durchschraublösung eignet, bei der ein durch ein Umlenkelement des Fensterhebers hindurch geführtes Befestigungselement zur Befestigung der Führungsschiene am Türmodulträger dient.

Eine entsprechende Positionierung der ersten, in Fahrzeuglängsrichtung x vorderen Führungsschiene 63 kann auch bei einem jeweiligen Einzelträgerelement, z. B. einem jeweiligen vorderen Basisträgerelement 2, der vorhergehend beschriebenen Ausführungsbeispiele mehrteiliger Türmodulträger vorgesehen sein. D.h., die Realisierung unterschiedlicher Betriebspositionen für eine Führungsschiene eines Fensterhebers an einem Türmodulträger ist unabhängig davon, ob es sich bei dem Trägerelement, an dem die mindestens zwei entlang der Fahrzeuglängsachse x voneinander beabstandeten Sätze von Befestigungsstellen für die entsprechende Führungsschiene 63 vorgesehen sind, um ein Trägerelement handelt, welches den vollständigen Türmodulträger 1 bildet, oder um ein Trägerelement, welches nur einen Teil des kompletten Türmodulträgers darstellt.

Wichtig ist, dass vorliegend die (mindestens zwei) unterschiedlichen Positionen, die eine jeweilige Führungsschiene 63 am Modulträger 1 - entlang der Fahrzeuglängsrichtung x betrachtet - annehmen kann, nicht einerseits einer sogenannten Transportposition und andererseits einer Betriebsposition entsprechen. Es geht hier also nicht darum, eine Führungsschiene zunächst in einer Transport- oder Vormontageposition an einem Türmodulträger festzulegen, um sie dann für den späteren Betrieb des Fensterhebers, z.B. nach dem Einbau des Türmodulträgers in eine Kraftfahrzeugtür, in ihre Betriebs-oder Funktionsposition zu überführen, in der sie zur Führung einer zu verstellenden Fensterscheibe entlang einer Verstellrichtung (im Wesentlichen entlang der vertikalen Fahrzeugachse z) dient.

Vielmehr handelt es sich vorliegend bei beiden Positionen, die die vordere, erste Führungsschiene 63 entlang der Fahrzeuglängsrichtung x einnehmen kann und in denen sie jeweils über einen entsprechenden Satz Befestigungsstellen B1o, B1u oder B2o, B2u am Türmodulträger 1 befestigbar ist, jeweils um eine Betriebs- oder Funktionsposition der Führungsschiene 63, in der sie zum Führen einer Fensterscheibe bzw. genauer eines mit der Fensterscheibe verbundenen Mitnehmers entlang einer Verstellrichtung dient. Die beiden Sätze an Befestigungsstellen B1o, B1u; B2o, B2u dienen also dazu, die vordere, erste Führungsschiene 63 des Fensterhebers 6 wahlweise in einer von zwei Betriebs- oder Funktionspositionen am Türmodulträger 1 anordnen zu können.

Vorliegend handelt es sich jeweils um einen sogenannten zweisträngigen Fensterheber mit zwei quer zur Verstellrichtung der zu verstellenden Fensterscheibe, also quer zur vertikalen Fahrzeugachse z, voneinander beabstandeten Führungsschienen 63, 64, von denen mindestens eine Führungsschiene 63 in zwei unterschiedlichen Betriebspositionen positionierbar ist. Um auch die andere, hintere Führungsschiene 64 am Türmodulträger 1 anbringen zu können, sind somit insgesamt drei Sätze bzw. Paare von Befestigungsstellen B1o, B1u; B2o, B2u; B3o, B3u erforderlich. Bei einem einsträngigen Fensterheber mit nur einer Führungsschiene zur Führung der zu verstellenden Fensterscheibe genügen dementsprechend zwei Paare bzw. Sätze an Befestigungsstellen, an denen die eine (einzige) Führungsschiene des Fensterhebers wahlweise in einer von zwei möglichen Betriebspositionen anordenbar ist.

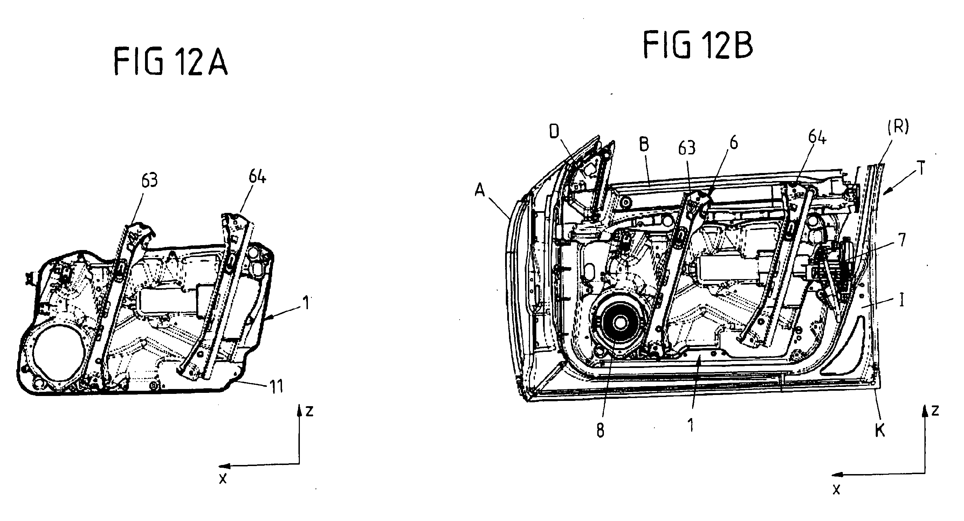

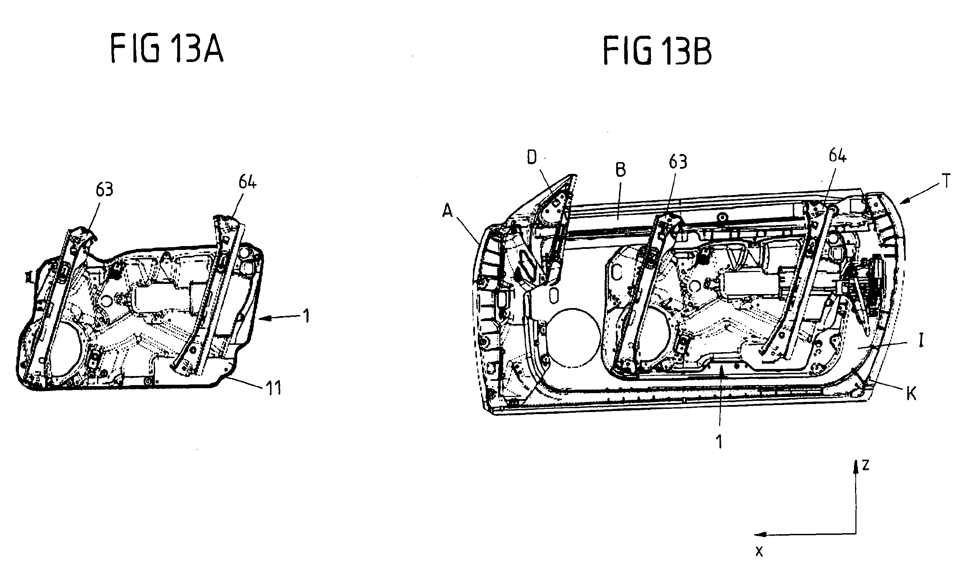

In den Figuren 12A und 12B ist eine erste Einbausituation der vorderen Führungsschiene 63 am Türmodulträger 1 dargestellt, wobei letzterer in der Darstellung gemäß Figur 12B zusammen mit weiteren hieran vormontierten Funktionskomponenten (Schlossbaugruppe 7 und Lautsprecher 8) in eine Türstruktur T eingebaut ist. Die Figuren 12A und 12B repräsentieren die entlang der Fahrzeuglängsachse x hintere mögliche Einbauposition der ersten, vorderen Führungsschiene 63, so dass diese entlang der Fahrzeuglängsachse x einen vergleichsweise geringen Abstand zur zweiten, hinteren Führungsschiene 64 aufweist. In den Figuren 13A und 13B ist demgegenüber die erste Führungsschiene 63 in ihrer anderen, entlang der Fahrzeuglängsachse x weiter vorne liegenden Einbauposition dargestellt.

Der Unterschied zwischen der in den Figuren 12A und 12B gezeigten Einbauposition und der in den Figuren 13A und 13B dargestellten Einbauposition der vorderen, ersten Führungsschiene 63, wobei jede der beiden Einbaupositionen eine Betriebsposition der Führungsschiene 63 repräsentiert, entspricht einer Parallelverschiebung der ersten Führungsschiene 63 entlang der Fahrzeuglängsrichtung x. Mit anderen Worten ausgedrückt unterscheiden sich die beiden Einbaupositionen der Führungsschiene 63 hinsichtlich räumlichen Lage der Führungsschiene 63entlang der Fahrzeuglängsrichtung x. Ergänzend zu einer Verschiebung der ersten Führungsschiene 63 entlang der Fahrzeuglängsrichtung x kann selbstverständlich auch eine gewisse Änderung der räumlichen Orientierung der Führungsschiene 63 in ihrer jeweiligen Einbauposition vorgesehen sein, etwa in der Weise, dass in den beiden Einbaupositionen der Führungsschiene 63 jeweils eine unterschiedliche Neigung bezüglich der vertikalen Fahrzeugachse z vorgesehen ist.

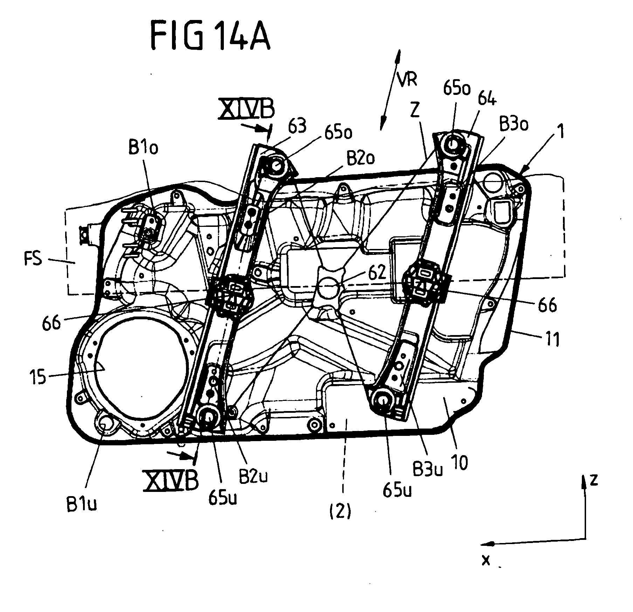

Dabei entspricht jede der beiden in den Figuren 12A, 12B einerseits und den Figuren 13A, 13B andererseits dargestellten Einbaupositionen der Führungsschiene 63 jeweils einer Betriebs- bzw. Funktionsposition der Führungsschiene 63, also einer Position, in der die Führungsschiene 63 dazu eingerichtet und vorgesehen ist, eine zu verstellende Fensterscheibe (über einen an der Führungsschiene geführten Mitnehmer) entlang ihrer Verstellrichtung zu bewegen. Dies wird nachfolgend anhand der Figuren 14A bis 15B noch näher erläutert werden.

Bei den in Figur 12B einerseits und Figur 13B andererseits dargestellten Türstrukturen T kann es sich einerseits jeweils um Türstrukturen für rahmenlose Kraftfahrzeugtüren, also insbesondere für Cabriolet- bzw. Coupe-Fahrzeuge handeln, die in unterschiedlichen Ausführungen durchaus unterschiedlich lange Türen (in Fahrzeuglängsrichtung x) haben können. Dies gilt beispielsweise bei Coupe-Fahrzeugen, die einerseits in einer viertürigen Version und andererseits in einer zweitürigen Version angeboten werden, wobei die zweitürige Version grundsätzlich längere Vordertüren aufweist, wie etwa in Figur 13B dargestellt, als die viertürige Version, wie etwa in Figur 12B dargestellt.

Alternativ kann es sich bei der Fahrzeugtür aus Figur 12B jedoch auch um eine mit Fensterrahmen versehene Fahrzeugtür handeln, wobei der entsprechende Rahmen (R) in Figur 12B oberhalb der Türbrüstung B nicht mit dargestellt ist.

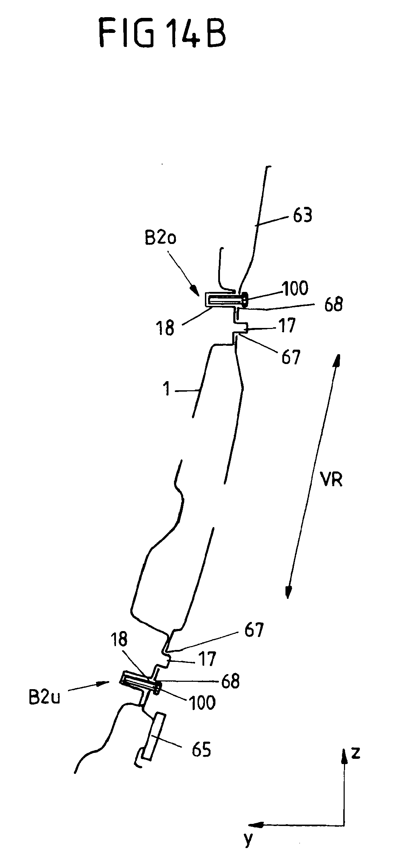

In den Figuren 14A und 14B ist am Beispiel der ersten, in Fahrzeuglängsrichtung x vorderen Führungsschiene 63 die Art der Befestigung der Führungsschiene 63 am Türmodulträger 1 genauer dargestellt, und zwar über ein Satz (Paar) entlang der vertikalen Fahrzeugachse z voneinander beabstandeter Befestigungsstellen B2o, B2u.

Dabei ist in der Draufsicht der Figur 14A außerdem an jeder der beiden am Türmodulträger 1 befestigten Führungsschienen 63, 64 jeweils der entlang der jeweiligen Führungsschiene verstellbare Mitnehmer 66 dargestellt, welche Mitnehmer 66 die in Figur 14A nur angedeutete Fensterscheibe FS tragen und durch eine Verstellbewegung entlang ihrer jeweiligen jeweils zugeordneten Führungsschiene 63, 64 jene Fensterscheibe FS in Verstellrichtung VR anheben bzw. absenken können. Die hierfür erforderliche Verstellkraft wird in die Mitnehmer 66 durch ein flexibles Zugmittel Z eingeleitet, welches mittels an den Führungsschienen 63, 64 vorgesehene Umlenkrollen 65o, 65u derart umgelenkt wird, dass es sich jeweils mit einem Verstellabschnitt entlang jeder der beiden Führungsschienen 63, 64 erstreckt, wobei der jeweilige entlang einer Führungsschiene 63, 64 erstreckte Verstellabschnitt des flexiblen Zugmittels Z mit dem dortigen Mitnehmer 66 verbunden ist. Die Krafteinleitung in das flexible Zugmittel erfolgt über einen Fensterheberantrieb, der in Figur 14A, welche eine Draufsicht auf die Nassraumseite des Türmodulträgers 1 zeigt, nicht erkennbar ist, da der Fensterheberantrieb üblicherweise auf der Trockenraumseite eines Türmodulträgers vorgesehen ist. Das vom Verstellantrieb erzeugte Antriebsmoment wird über eine den Türmodulträger 1 durchgreifende Abtriebswelle auf ein Verstellgetriebe 62 übertragen, welches eine drehbar gelagerte und vom flexiblen Zugmittel Z umschlungene Seiltrommel antreibt, um das vom Verstellantrieb erzeugte Antriebsmoment auf das flexible Zugmittel und hierüber auf die an den Führungsschienen 63, 64 geführten Mitnehmer 66 zu übertragen, die bei einer Verstellbewegung entlang der Führungsschienen 63, 64 wiederum die Fensterscheibe FS mitnehmen.

Bei dem in Figur 14A dargestellten Türmodulträger 1 kann es sich dabei einerseits um einen vollständigen Türmodulträger handeln oder andererseits auch nur um ein Basisträgerelement 2 eines Türmodulträgers, welches gegebenenfalls noch durch ein Zusatzträgerelement zu ergänzen ist.

Wie insbesondere anhand des in Figur 14B dargestellten Querschnitts des Türmodulträgers 1 im Bereich der ersten, vorderen Führungsschiene 63 erkennbar ist, umfassen die beiden entlang der vertikalen Fahrzeugachse z voneinander beabstandeten Befestigungsstellen B2o, B2u jeweils ein vom Türmodulträger 1 abstehendes Positionierelement 17, hier in Form eines Positionierzapfens, der in eine zugeordnete Positionieröffnung 67 der Führungsschiene 63 eingreift, so dass diese definiert am Türmodulträger 1 positioniert ist. Eine feste Verbindung zwischen der Führungsschiene 63 und dem Türmodulträger 1 wird sodann durch Befestigungsbolzen 100 (hier in Form von Gewindebolzen bzw. Schrauben) hergestellt, die an der jeweiligen Befestigungsstelle B2o, B2u jeweils eine Durchgangsöffnung/Befestigungsöffnung 68 in der Führungsschiene 6 durchgreifen und in ein dem Türmodulträger 1 zugeordnetes, eines Befestigungsöffnung 18 definierendes, Innengewinde tragendes Befestigungsteil eingeschraubt sind. Grundsätzlich sind aber auch beliebige andere Arten der Befestigung der jeweiligen Führungsschiene am Türmodulträger umsetzbar.

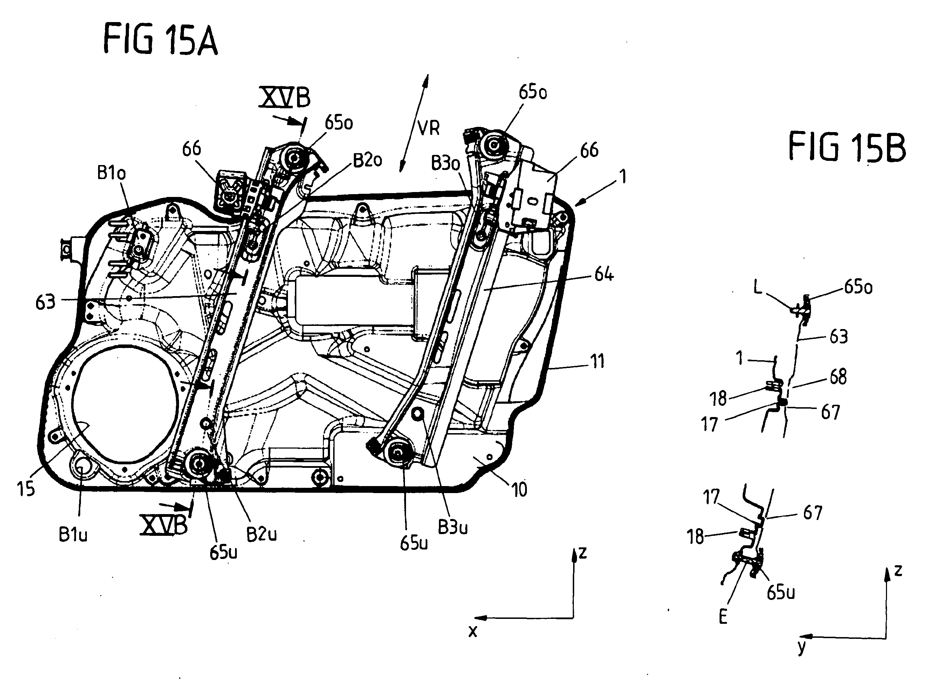

In den Figuren 15A und 15B ist eine Abwandlung der Anordnung aus den Figuren 14A und 14B dargestellt, wobei ein wesentlicher Unterschied darin besteht, dass hier lediglich das obere Umlenkelement 65o in Form einer Umlenkrolle (über einen Lagerbolzen L) in einfacher Weise an der Führungsschiene 63 gelagert ist, während im Bereich des unteren Umlenkelementes 65u, genauer in dessen Achse, ein Einstellelement E vorgesehen ist, um die Position der Führungsschiene 63 relativ zu dem Türmodulträger 1 entlang der horizontalen Fahrzeugquerachse y einstellen zu können. Dies ist insbesondere bei rahmenlosen Türen von Bedeutung.

Das Einstellelement E kann in bekannter Weise in einer Doppelfunktion zugleich auch als Befestigungselement zur Befestigung der Führungsschiene 63 am Türmodulträger 1 dienen (so genannte "Durchschraublösung"). Eine Befestigung der Führungsschiene 63 über die untere, an einem Innengewinde tragenden Befestigungsteil ausgebildete Befestigungsöffnung 18 kann dann entfallen.

## Patentansprüche

1. Türmodul zum Einbau in eine Kraftfahrzeugtür, mit
- einem in eine Kraftfahrzeugtür einzubauenden Türmodulträger (1) und
- einer Mehrzahl an dem Türmodulträger (1) vormontierter Funktionskomponenten einer Kraftfahrzeugtür, die gemeinsam mit dem Türmodulträger (1) in die Kraftfahrzeugtür einzubauen sind,
wobei unter den am Türmodulträger (1) vormontierten Funktionskomponenten mindestens eine Führungsschiene (63) eines Kraftfahrzeugfensterhebers (6) ist, die derart in einer Betriebsposition an türmodulträgerseitigen Befestigungsstellen festlegbar ist, dass sie sich in der Betriebsposition entlang der Verstellrichtung (VR) einer mittels des Fensterhebers (6) zu verstellenden Fensterscheibe (FS) erstreckt und die Fensterscheibe (FS) mittels der in ihrer Betriebsposition befindlichen Führungsschiene (63) entlang jener Verstellrichtung (VR) führbar ist,
**dadurch gekennzeichnet,**
**dass** am Türmodulträger (1) mindestens zwei unterschiedliche, voneinander beabstandete Sätze (B1, B2) türmodulträgerseitiger Befestigungsstellen (B1o, B1u; B2o, B2u) vorgesehen sind, die zur wahlweisen Anordnung der einen Führungsschiene (63) des Fensterhebers (6) in einer ersten oder mindestens einer hiervon verschiedenen, weiteren Betriebsposition dienen, wobei die Führungsschiene (63) in jeder der Betriebspositionen jeweils zur Führung der mittels des Fensterhebers (6) zu verstellenden Fensterscheibe (FS) entlang ihrer Verstellrichtung (VR) ausgerichtet ist.

2. Türmodul nach Anspruch 1, **dadurch gekennzeichnet, dass** sich die Führungsschiene (63) in jeder der mindestens zwei Betriebspositionen, in der sie über je einen Satz (B1, B2) türmodulträgerseitiger Befestigungsstellen (B1o, B1u; B2o, B2u) am Türmodulträger (1) festlegbar ist, jeweils entlang der Verstellrichtung (VR) der mittels des Fensterhebers (6) zu verstellenden Fensterscheibe (FS) erstreckt.

3. Türmodul nach Anspruch 1 oder 2, **dadurch gekennzeichnet, dass** an der Führungsschiene (63) ein Mitnehmer (66) des Türmodulträgers (1) entlang der Ersteckungsrichtung der Führungsschiene (63) beweglich geführt ist, an den die zu verstellende Fensterscheibe (FS) anzubinden ist.

4. Türmodul nach Anspruch 3, **dadurch gekennzeichnet, dass** sich die Führungsschiene (63) in jeder der mindestens zwei Betriebspositionen, in denen sie wahlweise am Türmodulträger (1) anordenbar ist, derart entlang der Verstellrichtung (VR) der mittels des Fensterhebers (6) zu verstellenden Fensterscheibe (FS) erstreckt, dass eine an den Mitnehmer (66) angebundene Fensterscheibe (FS) bei einer Verschiebung des Mitnehmers (66) entlang der Führungsschiene (63) in Verstellrichtung (VR) bewegt wird.

5. Türmodul nach einem der vorhergehenden Ansprüche, **dadurch gekennzeichnet, dass** jeder Satz (B1, B2) türmodulträgerseitiger Befestigungsstellen (B1o, B1u; B2o, B2u) mindestens zwei - bezogen auf den in eine Kraftfahrzeugtür eingebauten Zustand des Türmodulträgers (1) - entlang der vertikalen Fahrzeugachse (z) voneinander beabstandete Befestigungsstellen (B1o, B1u; B2o, B2u) aufweist, über die die Führungsschiene (63) am Türmodulträger (1) derart befestigbar ist, dass sie sich entlang der Verstellrichtung (VR) der mittels des Fensterhebers (6) zu verstellenden Fensterscheibe (FS) erstreckt.

6. Türmodul nach einem der vorhergehenden Ansprüche, **dadurch gekennzeichnet, dass** die beiden Sätze (B1, B2) türmodulseitiger Befestigungsstellen (B1o, B1u; B2o, B2u) - bezogen auf den in eine Kraftfahrzeugtür eingebauten Zustand des Türmodulträgers (1) - entlang der Fahrzeuglängsachse (x) voneinander beabstandet sind.

7. Türmodul nach einem der vorhergehenden Ansprüche, **dadurch gekennzeichnet, dass** die Führungsschiene (63) in den mindestens zwei Betriebspositionen, in denen die Führungsschiene (63) über die türmodulträgerseitigen Befestigungsstellen (B1o, B1u; B2o, B2u) am Türmodulträger (1) festlegbar ist, jeweils die gleiche räumliche Orientierung aufweist, so dass der Übergang von der einen Betriebsposition in die andere Betriebsposition einer Parallelverschiebung der Führungsschiene (63) entspricht.

8. Türmodul nach einem der vorhergehenden Ansprüche, **dadurch gekennzeichnet, dass** die mindestens zwei Betriebspositionen, in denen die Führungsschiene (63) über die mindestens zwei Sätze (B1, B2) türmodulseitiger Befestigungsstellen (B1o, B2u; B2o, B2u) am Türmodulträger (1) festlegbar ist - bezogen auf den in eine Kraftfahrzeugtür eingebauten Zustand des Türmodulträgers (1) - entlang der Fahrzeuglängsachse (x) voneinander beabstandet sind.

9. Türmodul nach einem der vorhergehenden Ansprüche, **dadurch gekennzeichnet, dass** eine jeweilige am Türmodulträger (1) vorgesehene Befestigungsstelle (B1o, B1u; B2o, B2u) der mindestens zwei Sätze (B1, B2) türmodulträgerseitiger Befestigungsstellen eine Befestigungsöffnung (18) für ein Befestigungselement (100) umfasst, mittels dem die Führungsschiene (63) lokal an der jeweiligen Befestigungsstelle (B1o, B1u; B2o, B2u) des Türmodulträgers (1) befestigbar ist, wobei die Befestigungsöffnung (18) insbesondere als eine Gewindeöffnung ausgebildet ist, in die ein gewindetragendes Befestigungselement (100) eindrehbar ist.

10. Türmodul nach Anspruch 9, **dadurch gekennzeichnet, dass** die Befestigungsöffnung (18) an einem vom Material des Türmodulträgers (1) separaten, am Türmodulträger (1) fixierten Teil ausgebildet ist.

11. Türmodul nach einem der vorhergehenden Ansprüche, **dadurch gekennzeichnet, dass** am Türmodulträger (1) Positioniermittel (17) vorgesehen sind, über die die Führungsschiene (63) in ihrer jeweiligen Betriebsposition am Türmodulträger (1) positionierbar ist, wobei die Positioniermittel (17) insbesondere durch mindestens einen Positionierzapfen gebildet werden, dem eine Positionieröffnung (67) an der Führungsschiene (63) zugeordnet ist.

12. Türmodul nach einem der vorhergehenden Ansprüche, **dadurch gekennzeichnet, dass** der Fensterheber (6) als ein einsträngiger Fensterheber mit genau einer Führungsschiene (63) zur Führung der mittels des Fensterhebers zu verstellenden Fensterscheibe (FS) ausgebildet ist und dass die eine Führungsschiene (63) mittels der mindestens zwei Sätze (B1, B2) türmodulträgerseitiger Befestigungsstellen (B1o, B1u; B2o, B2u) in mindestens zwei unterschiedlichen, voneinander beabstandeten Betriebspositionen am Türmodulträger (1) festlegbar ist.

13. Türmodul nach einem der Ansprüche 1 bis 11, **dadurch gekennzeichnet, dass** der Fensterheber (6) als ein mehrsträngiger, insbesondere zweisträngiger, Fensterheber mit mindestens zwei Führungsschienen (63, 64) zur Führung der zu verstellenden Fensterscheibe (FS) entlang ihrer Verstellrichtung (VR) ausgebildet ist und dass mindestens eine Führungsschiene (63) des Fensterhebers (6) über die mindestens zwei Sätze (B1, B2) türmodulträgerseitiger Befestigungsstellen (B1o, B1u; B2o, B2u) in mindestens zwei unterschiedlichen, voneinander beabstandeten Betriebspositionen am Türmodulträger (1) festlegbar ist.

14. Türmodul nach einem der vorhergehenden Ansprüche, **dadurch gekennzeichnet, dass** der Fensterheber (6) als ein Zugmittelfensterheber ausgebildet ist, der ein mittels eines Fensterheberantriebs (61) betätigbares flexibles Zugmittel (Z) des Türmodulträgers (1) umfasst, das mit einem Verstellabschnitt entlang der Führungsschiene (63) geführt ist und mit einem längsverschieblich an der Führungsschiene (63) gelagerten Mitnehmer (66) verbunden ist, welcher die zu verstellende Fensterscheibe (FS) trägt.

15. Türmodul nach einem der vorhergehenden Ansprüche, **dadurch gekennzeichnet, dass** der Türmodulträger (1) mindestens ein Basisträgerelement (2, 2a, 2b) umfasst, an welchem eine Schnittstelle (V) vorgesehen ist, über die an das Basisträgerelement (2, 2a, 2b) zur Bildung des Türmodulträgers (1) wahlweise mindestens ein Zusatzträgerelement (3, 3', 3a, 3b) anzuschließen ist, um die Ausdehnung des Türmodulträgers entlang mindestens einer Raumrichtung (x, z) an die Größe der Kraftfahrzeugtür anzupassen, in die der Türmodulträger (1) einzubauen ist.

## Claims

1. Door module for installation in a motor vehicle door with
- a door module carrier (1) to be installed in a motor vehicle door and
- a plurality of functional components of a motor vehicle door pre-installed on the door module carrier (1), which are to be installed together with the door module carrier (1) in the motor vehicle door,
wherein at least one guide rail (63) of a motor vehicle window lifter (6) is amongst the functional components pre-installed on the door module carrier (1), which can be fixed in an operating position at fastening points on the door module carrier side such that it extends in the operating position along the adjustment direction (VR) of a window pane (FS) to be adjusted by means of the window lifter (6) and the window pane (FS) can be guided by means of the guide rail (63) being in its operating position along said adjustment direction (VR),
**characterized in that**
at least two different sets (B1, B2) of fastening points (B1o, B1u; B2o, B2u) on the door module carrier side, spaced apart from each other are provided on the door module carrier (1), which serve for an selective arrangement of the one guide rail (63) of the window lifter (6) in a first or at least one other different operating position, wherein the guide rail (63) is aligned in each of the operating positions in each case for guiding the window pane (FS) to be adjusted by means of the window lifter (6) along the adjustment direction (VR) thereof.

2. Door module according to claim 1, **characterized in that** the guide rail (63) extends in each of the at least two operating positions, in which said guide rail can be mounted on the door module carrier (1) via one set (B1, B2) of fastening points (B1O, B1U; B2O, B2U) being on the door module carrier side in each case along the adjustment direction (VR) of the window pane (FS) to be adjusted by means of the window lifter (6).

3. Door module according to claim 1 or 2, **characterized in that** a carrier (66) of the door module carrier (1) is movably guided on the guide rail (63) along the extension direction of the guide rail (63), wherein the window pane (FS) to be adjusted is to be tied to said carrier.

4. Door module according to claim 3, **characterized in that** the guide rail (63) extends in each of the at least two operating positions, in which said guide rail can be arranged optionally on the door module carrier (1), along the adjustment direction (VR) of the window pane (FS) to be adjusted by means of the window lifter (6) such that a window pane (FS) being tied to the carrier (66) is moved when displacing the carrier (66) along the guide rail (63) in adjustment direction (VR).

5. Door module according to anyone of the preceding claims, **characterized in that** each set (B1, B2) of fastening points (B1o, B1u; B2o, B2u) being on the door module carrier side comprises at least two - in respect to the installed state of the door module carrier (1) in a motor vehicle door - fastening points (B1o, B1u; B2o, B2u) being spaced apart from each other along the vertical vehicle axis (z) via which the guide rail (63) can be fixed on the door module carrier (1) such that said guide rail extends along the adjustment direction (VR) of the window pane (FS) to be adjusted by means of the window lifter (6).

6. Door module according to anyone of the preceding claims, **characterized in that** the two sets (B1, B2) of fastening points (B1o, B1u; B2o, B2u) being on the door module carrier side - in respect to the installed status of the door module carrier (1) in a motor vehicle door - are being spaced apart from each other along the vehicle longitudinal axis (x).

7. Door module according to anyone of the preceding claims, **characterized in that** the guide rail (63) has in the at least two operating positions, in which the guide rail (63) can be fixed on the door module carrier (1) via the fastening points (B1o, B1u; B2o, B2u) being on the door module carrier side, in each case the same spatial orientation so that the transfer from the one operating position into the other operating position corresponds to a parallel displacement of the guide rail (63).

8. Door module according to anyone of the preceding claims, **characterized in that** the at least two operating positions, in which the guide rail (63) can be fixed on the door module carrier (1) via the at least two sets (B1, B2) of fastening points (B1o, B1u; B2o, B2u) being on the modular carrier side - in respect to the installed state of the door module carrier (1) in a motor vehicle door - are being spaced apart from each other along the vehicle longitudinal axis (x).

9. Door module according to anyone of the preceding claims, **characterized in that** a respective fastening point (B1o, B1u; B2o, B2u) provided on the door module carrier (1) of the at least two sets (B1, B2) of fastening points on the door module carrier side comprise a fastening opening (18) for a fastening element (100) by means of which the guide rail (63) can be locally fixed to the respective fastening point (B1o, B1u; B2o, B2u) of the door module carrier (1), wherein the fastening opening (18) is in particular formed as a thread opening, into which a threaded fastening element (100) can be screwed in.

10. Door module according to claim 9, **characterized in that** the fastening opening (18) is formed on a part being separated from the material of the door module carrier (1) and being fixed to the door module carrier (1).

11. Door module according to anyone of the preceding claims, **characterized in that** a positioning means (17) is provided on the door module carrier (1) via which the guide rail (63) can be positioned in its respective operating position on the door module carrier (1), wherein the positioning means (17) is formed in particular by at least one positioning pin, to which a positioning opening (67) on the guide rail (63) is assigned.

12. Door module according to anyone of the preceding claims, **characterized in that** the window lifter (6) is formed as a one-stranded window lifter with exact one guide rail (63) for guiding the window pane (FS) to be adjusted by means of the window lifter, and that the one guide rail (63) can be fixed by means of the at least two sets (B1, B2) of fastening points (B1o, B1u; B2o, B2u) being on the door module carrier side in at least two different operating positions being spaced apart from each other on the door module carrier (1).

13. Door module according to one of the claims 1 to 11, **characterized in that** the window lifter (6) is formed as a multi-stranded, in particular two-stranded, window lifter with at least two guide rails (63, 64) for guiding the window pane (FS) to be adjusted along its adjustment direction (VR) and that at least one guide rail (63) of the window lifter (6) can be fixed in at least two different operating positions being spaced apart from each other on the door module carrier (1) via the at least two sets (B1, B2) of fastening points (B1o, B1u; B2o, B2u) being on the door module carrier side.

14. Door module according to anyone of the preceding claims, **characterized in that** the window lifter (6) is formed as a pulley means window lifter, which comprises a flexible pulling means (Z) of the door module carrier (1), which can be actuated by means of a window lifter drive (61), which is guided with an adjustment section along the guide rail (63) and is connected to a carrier (66) being mounted longitudinally displaceable on the guide rail (63), which carries the window pane (FS) to be adjusted.

15. Door module according to anyone of the preceding claims, **characterized in that** the door module carrier (1) comprises at least one basis carrier element (2, 2a, 2b) on which an interface (V) is provided via which optionally at least one additional carrier element (3, 3' 3a, 3b) is to be connected to the basis carrier element (2, 2a, 2b) for forming the door module carrier (1) in order to adapt the extension of the door module carrier along at least one spatial direction (x, z) to the size of the motor vehicle door, into which the door module carrier (1) is to be installed.

## Revendications

1. Module de porte conçu pour être intégré dans une porte de véhicule automobile, comprenant
- un support (1) de module de porte, devant être intégré dans une porte de véhicule automobile, et
- une pluralité de composants fonctionnels d'une porte de véhicule automobile, qui sont montés préalablement sur le support (1) du module de porte et doivent être intégrés dans la porte de véhicule automobile, conjointement au support (1) du module de porte,
parmi les composants fonctionnels montés préalablement sur le support (1) du module de porte, figure au moins une glissière de guidage (63) d'un lève-vitre (6) du véhicule automobile qui peut être placée à demeure dans une position de fonctionnement, dans des zones de fixation situées côté support du module de porte, de telle sorte qu'elle s'étende, dans la position de fonctionnement, le long de la direction de déplacement (VR) d'une vitre (FS) devant être déplacée au moyen du lève-vitre (6), et que la vitre (FS) puisse être guidée le long de cette direction de déplacement (VR) au moyen de la glissière de guidage (63) dans sa position de fonctionnement,
**caractérisé par le fait**
**qu'**au moins deux groupes différents (B1, B2) de zones de fixation (B1o, B1u ; B2o, B2u) situées côté support du module de porte, distants l'un de l'autre, sont prévus sur le support (1) du module de porte, lesquels groupes servent à placer sélectivement la glissière de guidage (63) du lève-vitre (6) dans une première position de fonctionnement, ou au moins dans une autre position de fonctionnement différente de cette dernière, dans chacune des positions de fonctionnement, la glissière de guidage (63) est respectivement agencée pour guider, la long de sa direction de déplacement (VR), la vitre (FS) devant être déplacée au moyen du lève-vitre (6).

2. Module de porte selon la revendication 1, **caractérisé par le fait que**, dans chacune des au moins deux positions de fonctionnement dans laquelle elle peut être placée à demeure sur le support (1) du module de porte, par l'intermédiaire d'un groupe respectif (B1, B2) de zones de fixation (B1o, B1u ; B2o, B2u) situées côté support du module de porte, la glissière de guidage (63) s'étend respectivement la long de la direction de déplacement (VR) de la vitre (FS) devant être déplacée au moyen du lève-vitre (6).

3. Module de porte selon la revendication 1 ou 2, **caractérisé par le fait qu'**un organe d'entraînement (66) du support (1) du module de porte, auquel doit être rattachée la vitre (FS) à déplacer, est guidé sur la glissière de guidage (63) déplaçable le long de la direction de l'étendue de la glissière de guidage (63).

4. Module de porte selon la revendication 3, **caractérisé par le fait que**, dans chacune des au moins deux positions de fonctionnement dans lesquelles elle peut être sélectivement placée sur le support (1) du module de porte, la glissière de guidage (63) s'étend le long de la direction de déplacement (VR) de la vitre (FS) devant être déplacée au moyen du lève-vitre (6), de façon telle qu'une vitre (FS) rattachée à l'organe d'entraînement (66) est déplacée dans la direction de déplacement (VR), lors d'un coulissement de l'organe d'entraînement (66) le long de la glissière de guidage (63).

5. Module de porte selon l'une des revendications précédentes, **caractérisé par le fait que** chaque groupe (B1, B2) de zones de fixation (B1o, B1u ; B2o, B2u), situées côté support du module de porte, comprend au moins deux zones de fixation (B1o, B1u ; B2o, B2u) distantes l'une de l'autre le long de l'axe vertical (z) du véhicule -par rapport à la situation dans laquelle le support (1) du module de porte est intégré dans une porte de véhicule automobile-, par l'intermédiaire desquelles la glissière de guidage (63) peut être fixée au support (1) du module de porte de façon telle qu'elle s'étende le long de la direction de déplacement (VR) de la vitre (FS) devant être déplacée au moyen du lève-vitre (6).

6. Module de porte selon l'une des revendications précédentes, **caractérisé par le fait que** les deux groupes (B1, B2) de zones de fixation (B1o, B1u ; B2o, B2u), situées du côté du module de porte, sont distants l'un de l'autre le long de l'axe longitudinal (x) du véhicule -par rapport à la situation dans laquelle le support (1) du module de porte est intégré dans une porte de véhicule automobile.

7. Module de porte selon l'une des revendications précédentes, **caractérisé par le fait que** la glissière de guidage (63) présente, à chaque fois, la même orientation dans l'espace dans les au moins deux positions de fonctionnement dans lesquelles la glissière de guidage (63) peut être placée à demeure sur le support (1) du module de porte, par l'intermédiaire des zones de fixation (B1o, B1u ; B2o, B2u) situées côté support du module de porte, de telle sorte que le passage de l'une des positions de fonctionnement à l'autre position de fonctionnement corresponde à un coulissement parallèle de la glissière de guidage (63).

8. Module de porte selon l'une des revendications précédentes, **caractérisé par le fait que** les au moins deux positions de fonctionnement, dans lesquelles la glissière de guidage (63) peut être placée à demeure sur le support (1) du module de porte par l'intermédiaire des deux groupes minimaux (B1, B2) de zones de fixation (B1o, B1u ; B2o, B2u) situées du côté du module de porte sont distantes l'une de l'autre le long de l'axe longitudinal (x) du véhicule -par rapport à la situation dans laquelle le support (1) du module de porte est intégré dans une porte de véhicule automobile.

9. Module de porte selon l'une des revendications précédentes, **caractérisé par le fait qu'**une zone respective de fixation (B1o, B1u ; B2o, B2u) des au moins deux groupes (B1, B2) de zones de fixation situées côté support du module de porte, prévue sur le support (1) du module de porte, présente un orifice de fixation (18) pour un élément de fixation (100) au moyen duquel la glissière de guidage (63) peut être fixée localement à la zone respective de fixation (B1o, B1u ; B2o, B2u) du support (1) du module de porte, le orifice de fixation (18) étant notamment réalisé sous la forme d'un orifice taraudé dans lequel peut être vissé un élément de fixation (100) porteur d'un filetage.

10. Module de porte selon la revendication 9, **caractérisé par le fait que** l'orifice de fixation (18) est pratiqué sur une partie distincte du matériau du support (1) du module de porte et fixée au support (1) du module de porte.

11. Module de porte selon l'une des revendications précédentes, **caractérisé par le fait que**, sur le support (1) du module de porte, sont prévus des moyens de positionnement (17) par l'intermédiaire desquels la glissière de guidage (63) peut être placée dans sa position respective de fonctionnement sur le support (1) du module de porte, les moyens de positionnement (17) étant formés, en particulier, par au moins un tenon de positionnement auquel est assigné un orifice de positionnement (67) situé sur la glissière de guidage (63).

12. Module de porte selon l'une des revendications précédentes, **caractérisé par le fait que** le lève-vitre (6) est réalisé sous la forme d'un lève-vitre à brin unique comportant exactement une glissière de guidage (63) pour le guidage de la vitre (FS) devant être déplacée au moyen du lève-vitre, et que la glissière de guidage (63) peut être placée à demeure sur le support (1) du module de porte, dans au moins deux positions de fonctionnement différentes distantes l'une de l'autre, au moyen des au moins deux groupes (B1, B2) de zones de fixation (B1o, B1u ; B2o, B2u) situées côté support du module de porte.

13. Module de porte selon l'une des revendications 1 à 11, **caractérisé par le fait que** le lève-vitre (6) est réalisé sous la forme d'un lève-vitre à plusieurs brins, en particulier à deux brins, comprenant au moins deux glissières de guidage (63, 64) pour le guidage, le long de sa direction de déplacement (VR), de la vitre (FS) devant être déplacée, et qu'au moins une glissière de guidage (63) du lève-vitre (6) peut être placée à demeure sur le support (1) du module de porte, dans au moins deux positions de fonctionnement différentes distantes l'une de l'autre, par l'intermédiaire des deux groupes minimaux (B1, B2) de zones de fixation (b1o, B1u ; B2o, B2u) situées côté support du module de porte.

14. Module de porte selon l'une des revendications précédentes, **caractérisé par le fait que** le lève-vitre (6) est réalisé sous la forme d'un lève-vitre à moyen de traction, qui inclue un moyen flexible de traction (Z) du support (1) du module de porte manoeuvrable à l'aide d'un entraînement (61) du lève-vitre, lequel moyen de traction étant guidé le long de la glissière de guidage (63) par un tronçon de déplacement, et étant relié à un organe d'entraînement (66) monté à coulissement longitudinal sur la glissière de guidage (63), lequel organe d'entraînement porte la vitre (FS) devant être déplacée.

15. Module de porte selon l'une des revendications précédentes, **caractérisé par le fait que** le support (1) du module de porte inclut au moins un élément de support de base (2, 2a, 2b), sur lequel est prévue une zone de jonction (V) par l'intermédiaire de laquelle au moins un élément de support additionnel (3, 3', 3a, 3b) doit être sélectivement adjoint au élément de support de base (2, 2a, 2b) pour former le support (1) du module de porte, de manière à adapter l'étendue du support du module de porte, le long d'au moins une direction spatiale (x, z), à la taille de la porte de véhicule automobile dans laquelle le support (1) du module de porte doit être intégré.
